# EUROPEAN PATENT SPECIFICATION

(11) **EP 1 306 418 B1**
(45) Date of publication and mention of the grant of the patent: **04.06.2008**
(21) Application number: 02022411.9
(22) Date of filing: 04.10.2002
(51) Int. Cl.: C09K 19/44, C09K 19/10

(54) **Liquid crystalline medium and liquid crystal display**
Flüssigkristallines Medium und Flüssigkristallanzeige
Milieu liquide cristallin et dispositif d'affichage à cristaux liquides

(30) Priority: 23.10.2001 EP 01125182
(43) Date of publication of application: 02.05.2003
(73) Proprietor: Merck Patent GmbH, 64293 Darmstadt (DE)
(72) Inventor: Manabe, Atsutaka, 64625 Wilmshausen/Bensheim (DE); Kress, Elena, 63853 Mömlingen (DE); Reiffenrath, Volker, 64380 Rossdorf (DE)

(56) References cited:
- EP-A- 1 026 143
- WO-A-01/12751
- WO-A-02/44304
- WO-A-90/09420
- WO-A-98/07674
- DE-A- 10 118 734
- DE-A- 19 720 529
- DE-A- 19 919 348
- GB-A- 2 292 745
- GB-A- 2 296 253
- US-A- 5 328 644

## Description

### Field of the invention

The present invention relates to liquid crystalline media and to liquid crystal displays comprising these media, especially to displays addressed by an active matrix (AMDs) and in particular to displays addressed by thin film transistors (TFTs), especially for projection type displays. Preferably the TFTs are prepared on silicon (LCoS). The inventive media are also well suited for displays of the optically compensated bend (OCB) mode.

### Problem to be solved and state of the art

Liquid Crystal Displays (LCDs) are widely used to display information. Electro-optical modes employed are e.g. the twisted nematic (TN)-, the super twisted nematic (STN)-, the optically compensated bend (OCB)- and the electrically controlled birefringence (ECB)-mode with their various modifications, as well as others. Besides these modes, which all do use an electrical field, which is substantially perpendicular to the substrates, respectively to the liquid crystal layer, there are also electro-optical modes employing an electrical field substantially parallel to the substrates, respectively the liquid crystal layer, like e.g. the In-Plane Switching mode (as disclosed e.g. in DE 40 00 451 and EP 0 588 568). Especially this electrooptical mode is used for LCDs for modern desk top monitors.

The liquid cystals according to the present invention are preferably used in AM addressed displays in particular in TFTs displays, especially for projection type displays. Preferably the TFTs are prepared on silicon (LCoS). The inventive media are also well suited for displays of the OCB mode.

For these displays new liquid crystalline media with improved properties are required. Especially the birefingence (Δn) should be sufficiently high. Further, the dielectric anisotropy (Δε) should be high enough to allow a reasonably low operation voltage. Preferably Δε should be higher than 7 and very preferably preferably be higher than 9 or even higher than 10 but preferably not higher than 19 and in particular not higher than 15. Otherwise the resistivity of the mixtures tends to become inacceptably low for most TN-AMDs. Besides this parameter, the media have to exhibit a suitably wide range of the nematic phase, a rather small rotational viscosity and, as mentioned above, an at least moderately high specific resistivity.

The displays according to the present invention are preferably addressed by an active matrix (active matrix LCDs, short AMDs), preferably by a matrix of thin film transistors (TFTs). However, the inventive liquid crystals can also beneficiously be used in displays with other known addressing means.

There are various different display modes using composite systems of liquid crystal materials of low molecular weight together with polymeric materials such as e.g. polymer dispersed liquid crystal (PDLC)-, nematic curvilinearily aligned phase (NCAP)- and polymer network (PN)-systems, as disclosed for example in WO 91/05 029 or axially symmetric microdomain (ASM) systems and others. In contrast to these, the modes especially preferred according to the instant invention are using the liquid crystal medium as such, oriented on surfaces. These surfaces typically are pretreated to achieve uniform alignment of the liquid crystal material. The display modes according to the instant invention preferably use an electrical field substantially perpendicular to the composite layer.

LCDs are used for direct view displays, as well as for projection type displays.

Liquid crystal compositions with a high value of the birefringence suitable for LCDs and especially for AMD displays are known e. g. from U.S.P. 5,328,644, JP 06-264 059 (A) and DE 199 19 348. These compositions, however, do all have significant drawbacks. Most of them have, amongst other deficiencies, too low values of the birefringence and/or require operation voltages which are too high. Many of them also have too low resistivities, especially after exposure to elevated temperature and/or intense actinic radiation, inparticular strong visible light and/or UV radiation. Many of the media of the prior art do further lead to unfavourably long response times.

Thus, there is a significant need for liquid crystalline media with suitable properties for practical applications such as a wide nematic phase range, low viscosities, a high Δε, a sufficiently high resistivity and, in particular, an appropriately high optical anisotropy Δn, according to the display mode used.

### Present invention

Surprisingly, it now has been found that liquid crystalline media with a suitably high Δε, a suitable phase range, Δn and a sufficiently high resistivity can be realised, which do not exhibit the drawbacks of the materials of the prior art or at least do exhibit them to a significantly lesser degree.

These improved liquid crystalline media according to the instant application are comprising at least the following components:
- a dielectrically positive component, component A, consisting of dielectrically positive compounds, comprising one or more compounds of formula I and one or more compounds of formula II 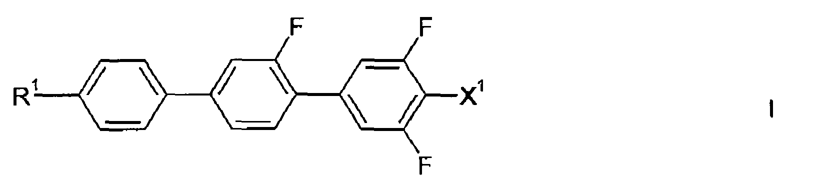 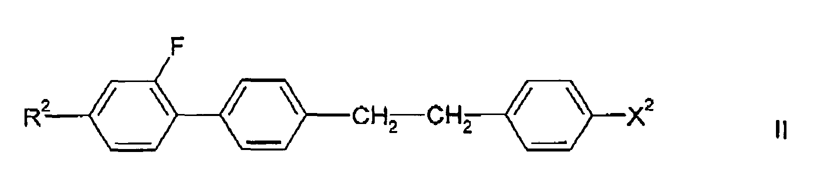 wherein
   - R¹ and R²: independently of each other, are alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
   - X¹ and X²,: independently of each other, are F, Cl or fluorinated alkyl or fluorinated alkoxy, each with 1 to 4 C-atoms,
   wherein, optionally, two of the 6-membered rings in formula I may be linked by an group selected from
   -CH₂-CH₂-, -CF₂-CF₂-, -CF₂-O-, -O-CF₂- and -CO-O-, and
- a dielectrically neutral component, component B, consisting of dielectrically neutral compounds, comprising one or more compounds of formula IVb 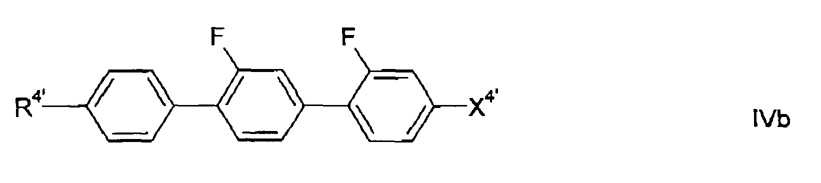
wherein
- R^{4'}: is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
- X^{4'}: is F.

Preferably the dielectrically positive component, component A is comprising one or more compounds of formula I and one or more compounds of formula II
wherein
X¹ is F or Cl, most preferably F and/or
and one or more compounds of formula II
wherein
X² is F or Cl, most preferably Cl.

Optionally the dielectrically positive component, component A is additionally comprising one or more compounds, preferably selected from the group of compounds of formulae of formulae III, IVa and V 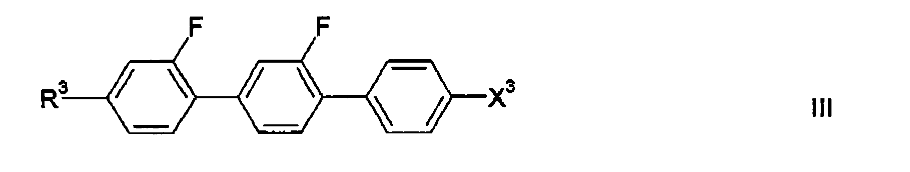 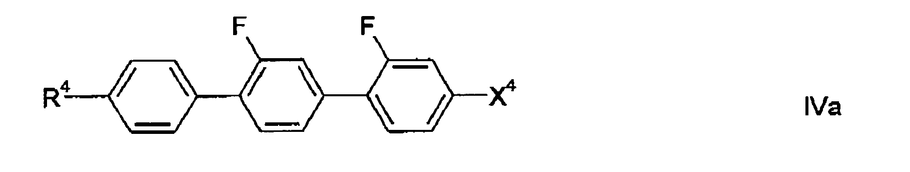 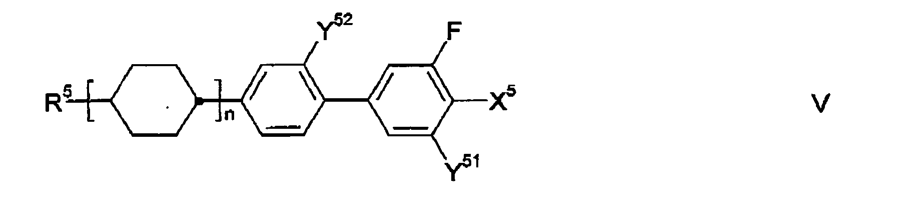 wherein
- R³, R⁴ and R⁵: independently of each other, are alkyl, a!koxy, fluorinated alkyl or fluorinated alkoxy with 1 to 7 C-atoms, alkenyl, alkenyloxy, alkoxyalkyl or fluorinated alkenyl with 2 to 7 C-atoms,
- X³ and X⁵: independently of each other, are F, Cl or fluorinated alkyl or fluorinated alkoxy, each with 1 to 4 C-atoms, preferably
X⁵ is F or Cl, most preferably F and
X³ is F or Cl, most preferably Cl,
- X⁴: is or fluorinated alkyl or fluorinated alkoxy, each with 1 to 4 C-atoms, preferably
OCF₃ or OCF₂H,
- Y⁵¹ and Y⁵²: are, independently of each other, H or F and
- n: is 0, 1 or 2, preferably 1 or 2, most preferably 2,
wherein, optionally, two of the 6-membered rings in formulae III to V may be linked by a group selected from
-CH₂-CH₂-, -CF₂-CF₂-, -CF₂-O-, -O-CF₂- and -CO-O-, preferably -CH₂-CH₂- and -CF₂-O-, most preferably -CH₂-CH₂-,

Optionally the dielectrically neutral component, component B, iscomprising one or more compounds of formula IVb' 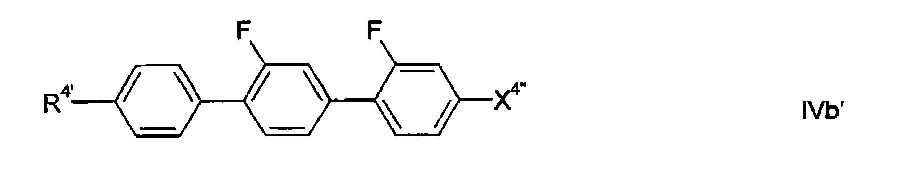 wherein
- R^{4'}: has the meaning given under formula IVb' above and
- X^{4"}: is Cl and
two of the 6-membered rings may be linked by a group selected from
-CH₂-CH₂-, -CF₂-CF₂-, -CF₂-O-, -O-CF₂- and -CO-O-, preferably -CH₂-CH₂- and -CF₂-O-, most preferably -CH₂-CH₂- or
- X^{4"}: is F and
two of the 6-membered rings are linked by a group selected from
-CH₂-CH₂-, -CF₂-CF₂-, -CF₂-O-, -O-CF₂- and -CO-O-, preferably -CH₂-CH₂- and -CF₂-O-, most preferably -CH₂-CH₂-.

Optionally the liquid crystalline media according to the instant application are comprising a dielectrically negative component, component C, consisting of dielectrically negative compounds.

Preferably the dielectrically positive component, component A is comprising one or more compounds selected from the group of formulae I, and III to V
wherein, optionally, two of the 6-membered rings in formulae I, and III to V may be linked by a group selected from
-CH₂-CH₂-, -CF₂-CF₂-, -CF₂-O-, -O-CF₂- and -CO-O-, preferably -CH₂-CH₂- and -CF₂-O-, most preferably -CH₂-CH₂-.

Preferably the dielectrically positive component, component A comprises one or more compounds each of formulae I and II and one or more compounds selected from the group of compounds each of formulae III, IVa and V and in particular one or more compounds each of formulae III and V.

Further the dielectrically positive component, component A optionally comprises one or more compounds of formula VI 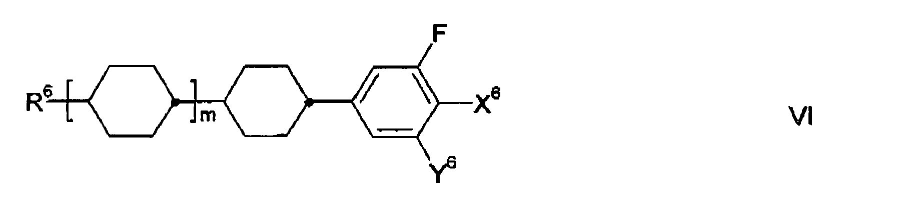 wherein
- R⁶: is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
- X⁶: is F, Cl or fluorinated alkyl or fluorinated alkoxy, each with 1 to 4 C-atoms, preferably F or Cl, most preferably F,
- X⁶: is H or F and
- m: is 0, 1 or 2, preferably 1 or 2 and most preferably 1,
wherein, optionally, two of the 6-membered rings may be linked by an group selected from
-CH₂-CH₂-, -CF₂-CF₂-, -CF₂-O-, -O-CF₂- and -CO-O-, preferably -CH₂-CH₂- and -CF₂-O-, most preferably -CH₂-CH₂-

The liqiud crystral mixtures according to the present invention comprise a dilectrically neutral component, component B. This component has a dielectrical anisotropy in the range from -1.5 to +3. Preferably it contains essentialy and especially preferably entirely of dielectrically positive compounds. Preferably this component, besides one or more compounds of formula IVb, additionally comprises one ore more dielectrically neutral compounds of formula VII 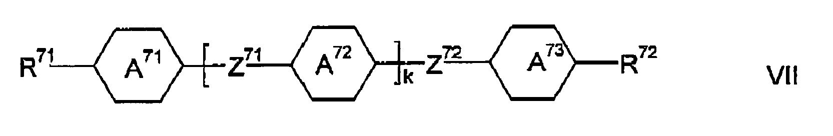 wherein
- R⁷¹ and R⁷²,: independently of each other, have the meaning given for R¹ under formula I above, 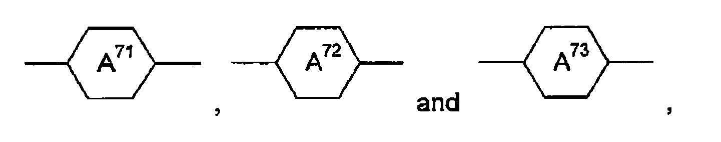 independently of each other, and in case 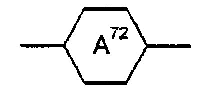 is present twice, also these, independently of each other, are 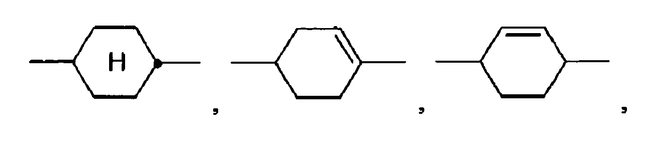 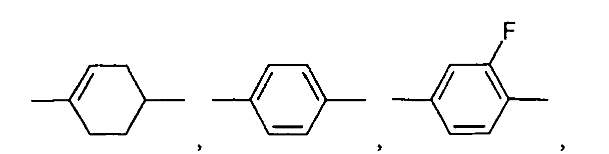 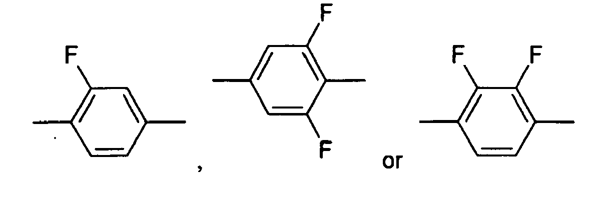 preferably at least one of 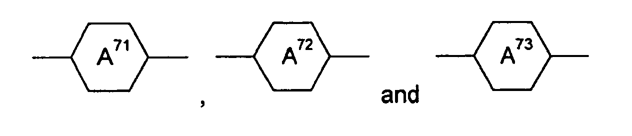 is 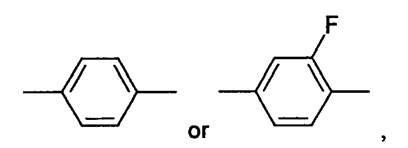 and preferably at least one of 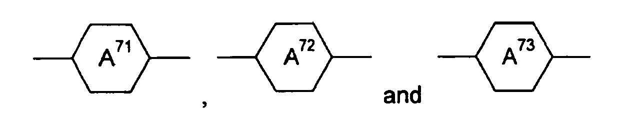 is 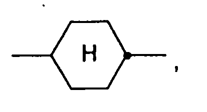
- Z⁷¹ and Z⁷²: are, independently of each other, and in case Z⁷¹ is present twice, also these independently of each other, -CH₂CH₂-, -COO-, trans -CH=CH-, trans -CF=CF-, -CH₂O-, -CF₂O- or a single bond, preferably at least one of them is a single bond and most preferably all are single bonds and
- k: is 0, 1 or 2, preferably 1 or 2
from which the compounds of formulae IVb and IVb' are excluded.

Optionally the liqiud crystral mixtures according to the present invention additionally comprise a dilectrically negative, component C. This component has a dielectrical anisotropy below-1.5, and consists of dielectrically negative compounds and comprises compounds of formula VIII 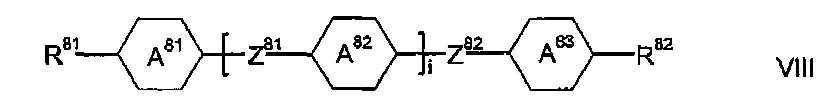 wherein
- R⁸¹ and R⁸²: independently of each other have the meaning given for R¹ under formula I above, 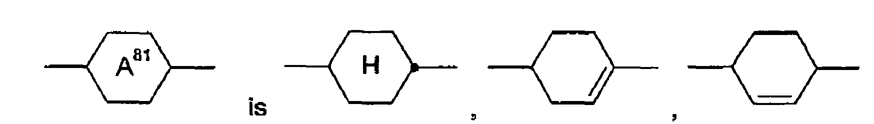 or 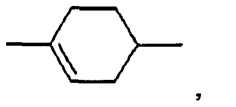 one of 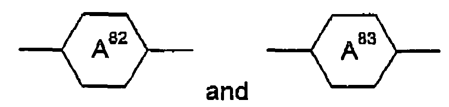 is 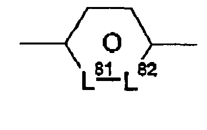 and the other one has one of the meanings given for 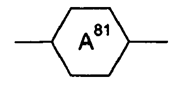 or is 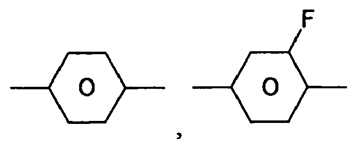 or 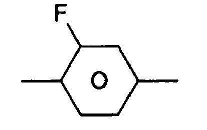
- L⁸¹ and L⁸²: are, independently of each other, =C(-F)- or =N-, preferably at least one one of them is =C(-F)- and most preferably both of them are =C(-F)- and
- Z⁸¹ and Z⁸²: are, independently of each other, -CH₂CH₂-, -COO-, trans -CH=CH-, trans -CF=CF-, -CH₂O-, -CF₂O- or a single bond, preferably at least one of them is a single bond and most preferably both are a single bond,
- i: is 0 or 1.

Preferably the liquid crystalline media according to the instant invention contain a component A comprising, preferably predominantly consisting of and most preferably entirely consisting of compounds selected from the group of of formulae I to VIII.

Comprising in this application means in the context of compositions that the entity referred to, e.g. the medium or the component, contains the component or components or of the compound or compounds in question, preferably in a total concentration of 10 % or more and most preferably of 20 % or more.

Predominantly consisting, in this context, means that the entity referred to contains 80 % or more, preferably 90 % or more and most preferably 95 % or more of the component or components or of the compound or compounds in question.

Entirely consisting, in this context, means that the entity referred to contains 98 % or more, preferably 99 % or more and most preferably 100.0 % of the component or components or of the compound or compounds in question.

Preferably component A comprises one or more compounds of formula I, wherein X¹ is F. Preferably component A further comprises one or more compounds of formula 11, wherein X² is Cl. Also preferably component A comprises one or more compounds of formula III, wherein X³ is Cl.

The compounds of formula V are preferably selected from the group of sub-formulae V-1 to V-12 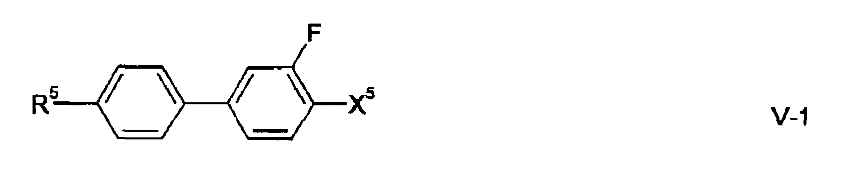 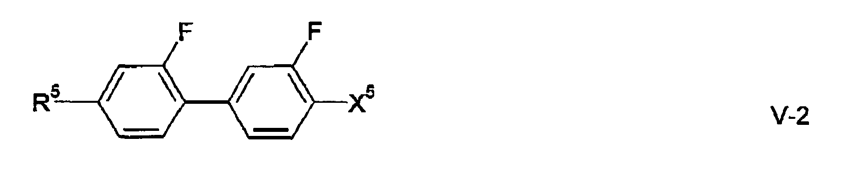 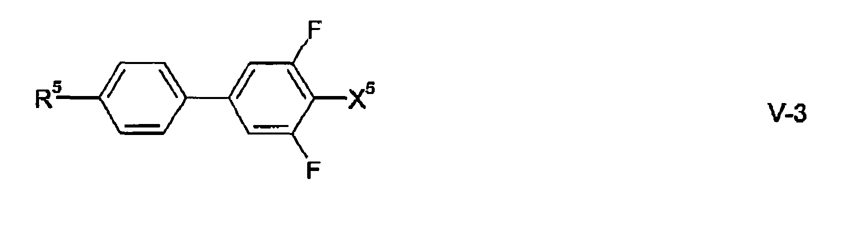 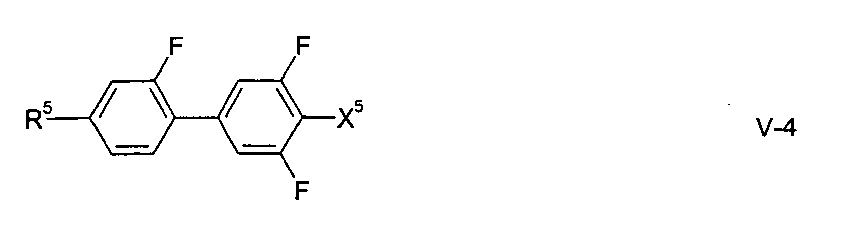 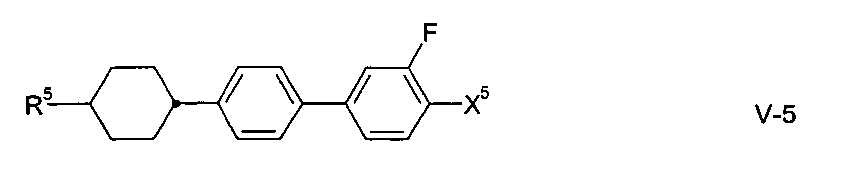 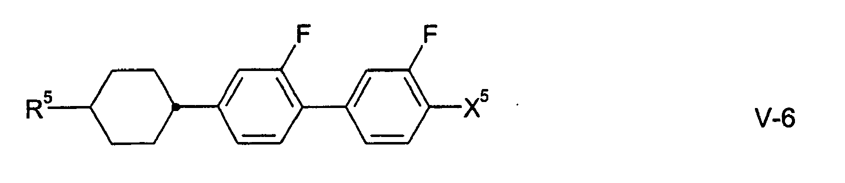 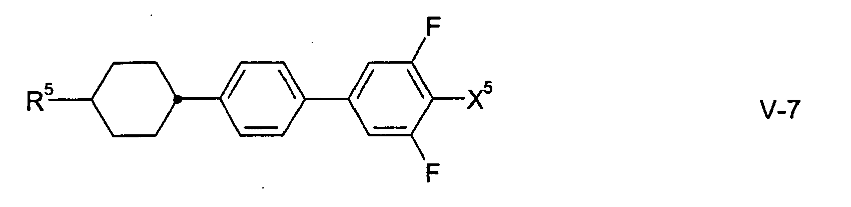 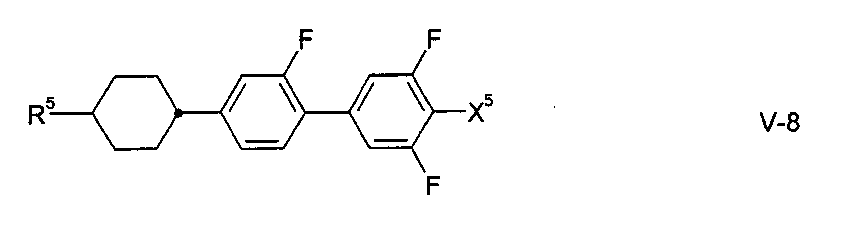 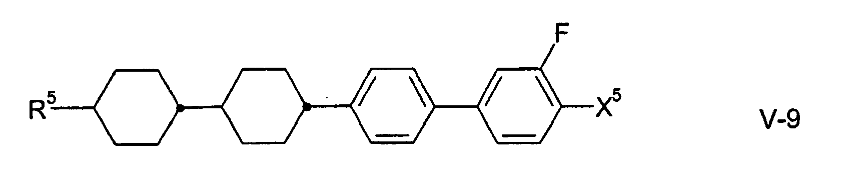 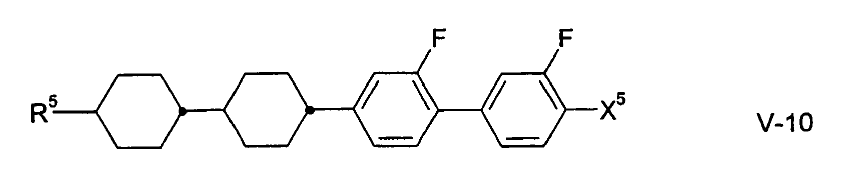 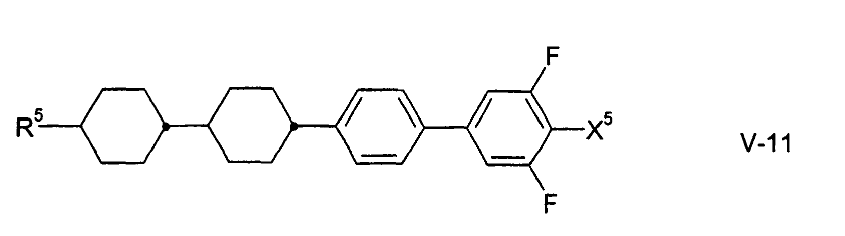 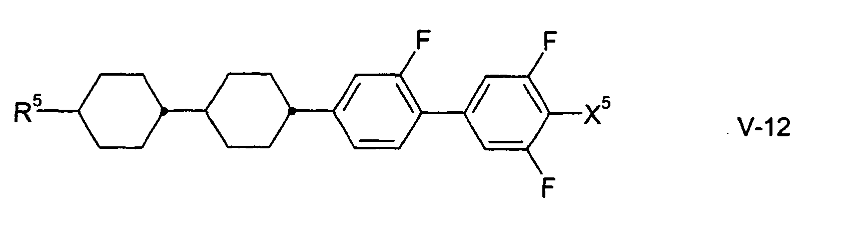 wherein
- R⁵and X⁵: have the respective meanings given under formula V above and preferably
- R⁵: is n-alkyl with 1 to 5 C-atoms and
- X⁵: is F, Cl, -CF₃ or -OCF₃, most preferably F.

Especially preferred are the media contain compounds of formula V selected from the group of sub-formulae V-5 to V-12, most preferably V-5 to V-8 and V-12 and in particular V-5, V-7, V-8 and V-12.

The compounds of formula VI are preferably selected from the group of sub-formulae VI-1 to VI-18 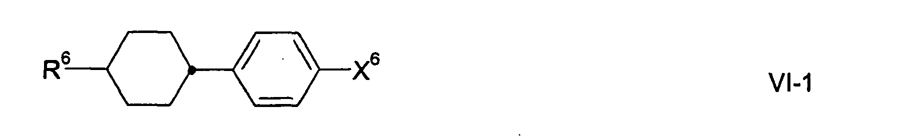 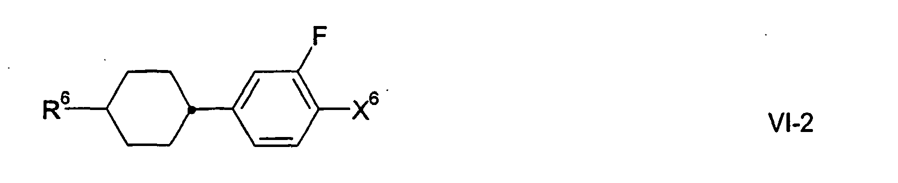 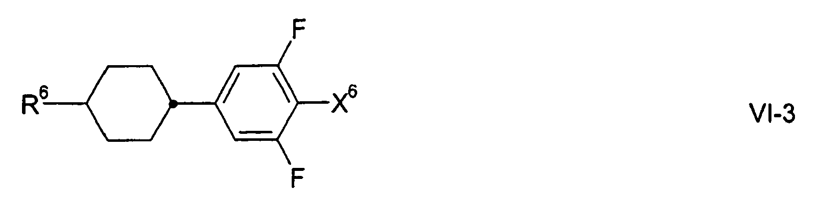 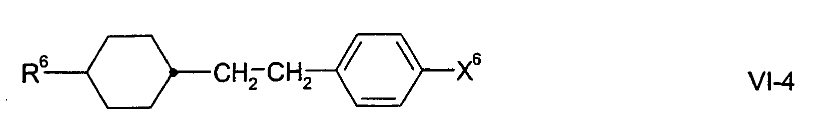 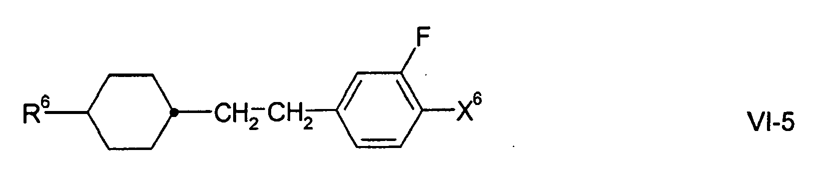 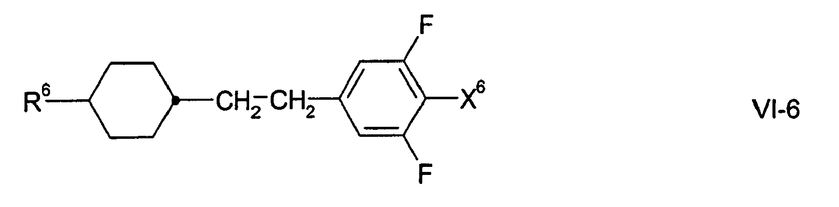 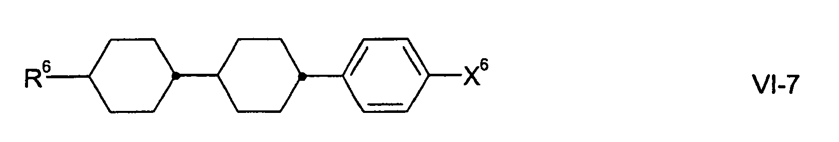 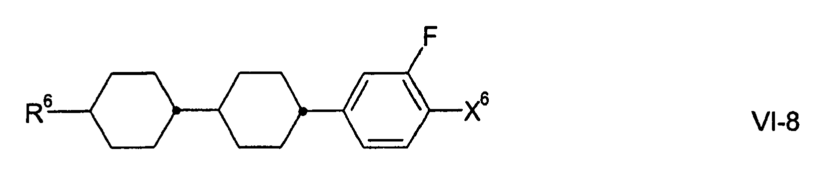 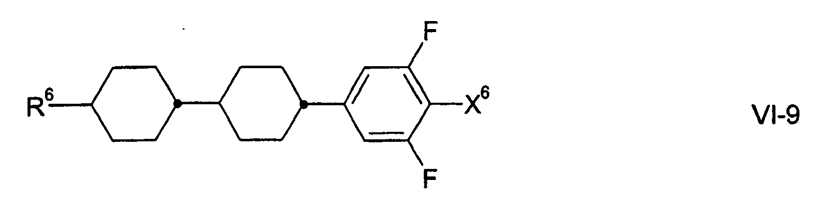 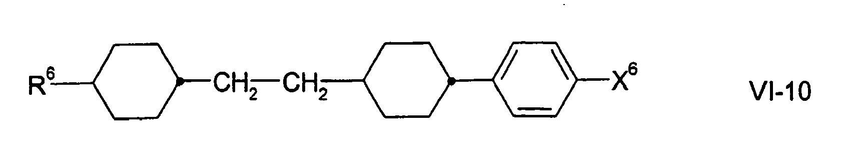 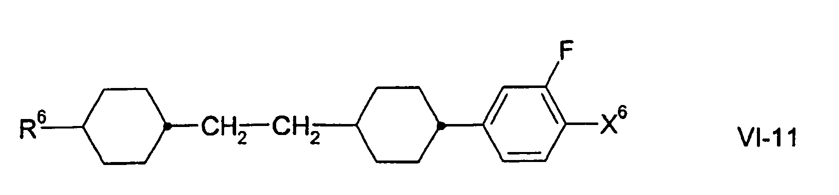 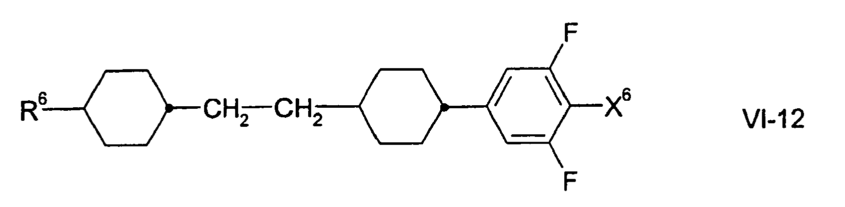 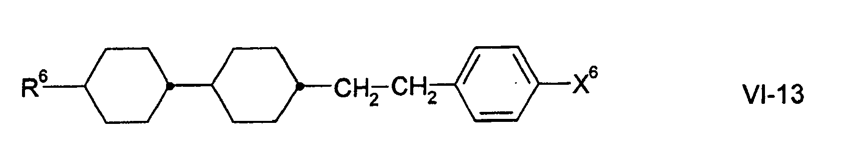 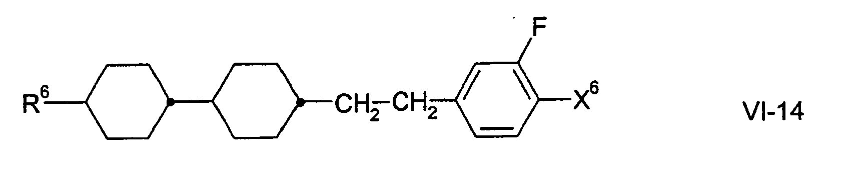 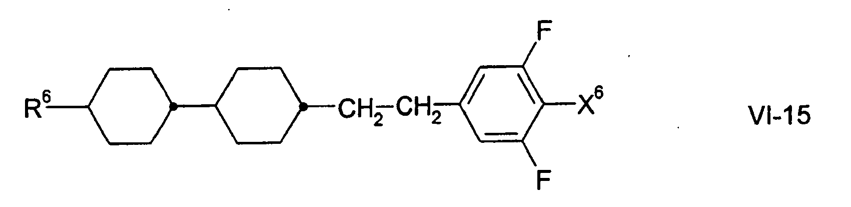 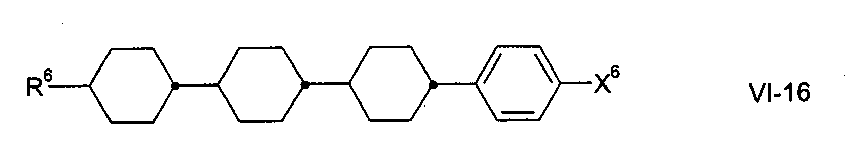 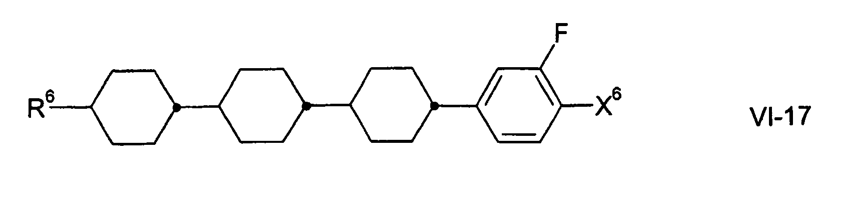 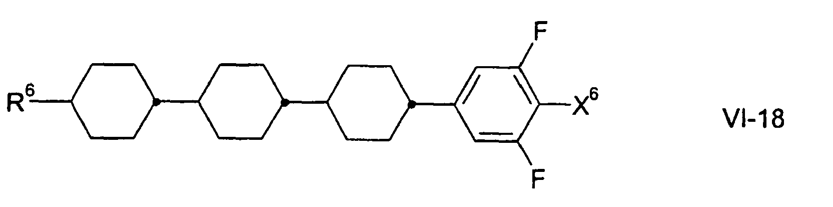 wherein
- R⁶ and X⁶: have the respective meanings given under formula VI above and preferably
- R⁶: is n-alkyl with 1 to 5 C-atoms or alkenyl with 2 to 5 C-atoms and
- X⁶: is F, Cl, -CF₃ or -OCF₃, preferably F or Cl and most preferably F.

Most preferably the medium contains compounds of formula VI selected from the group of sub-formulae VI-7 to VI-15 and in particular VI-8 and VI-9.

Especially preferred are further media comprising compounds selected from the group of formulae VI-8, VI-11 and VI-14 and/or VI-9, VI-12 and VI-15, in particular with R⁶ being alkenyl, especially vinyl.

In a preferred embodiment the liquid crystalline media according to the instant invention contains a component B comprising, preferably predominantly consisting of and most preferably entirely consisting of compounds selected from the group of formulae IVb and VII.

In a further preferred embodiment the liquid crystal medium contains a liquid crystal component C, which is preferably predominantly consisting of and most preferably entirely consisting of compounds of formula VIII.

This component C may be present, and preferably is present, besides components A and B.

The compounds of formula VII are preferably selected from the group of sub-formulae VII-1 to VII-10 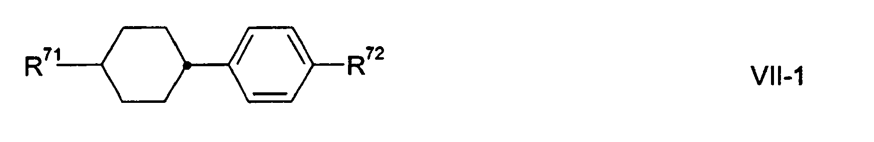 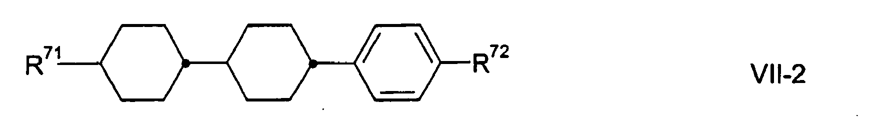 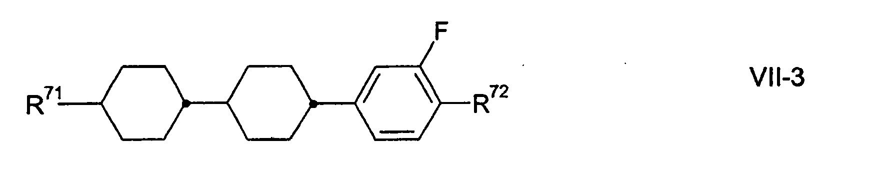 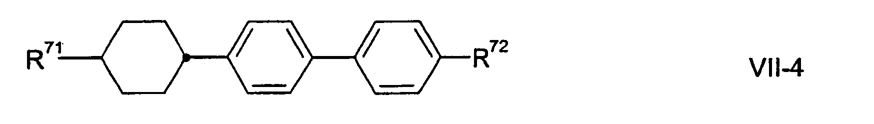 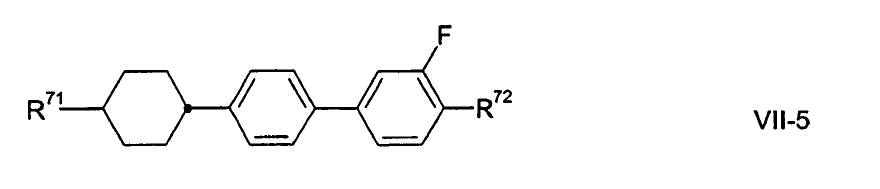 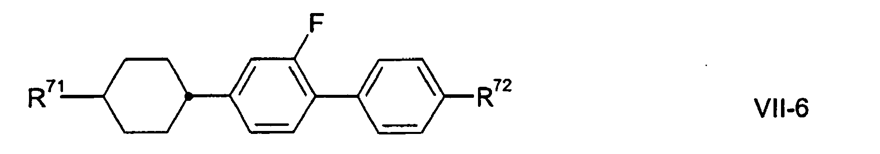 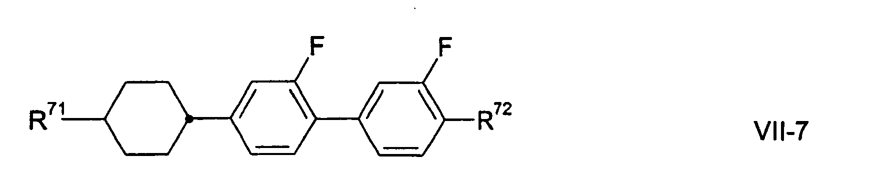 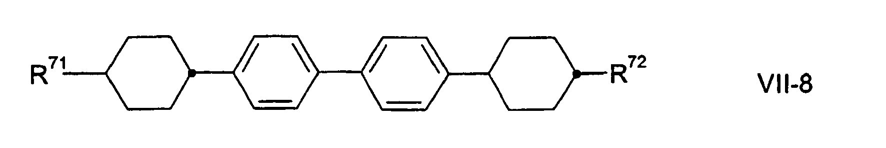 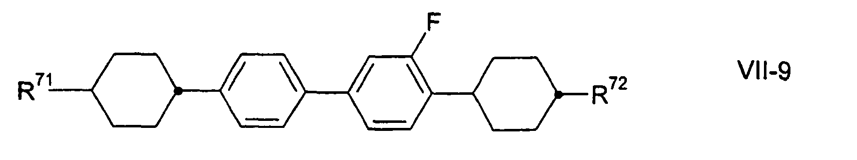 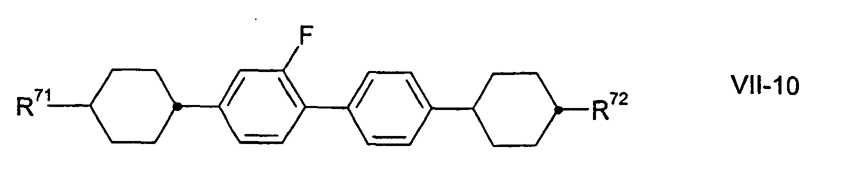 wherein
- R⁷¹ and R⁷²: have the meaning given under Formula VII above.

Most preferably the medium contains compounds of formula VII selected from the group of sub-formulae VII-1, VII-2, VII-4, VII-6, VII-8 and VII-10 and in particular VII-4, VII-6, VII-8 and VII-10.

Especially preferred are further media comprising compounds selected from the group of formula VII-3 and in particular with R⁷² beeing alkenyl, especially vinyl.

Also other mesogenic, as well as nonmesogenic, compounds, which are not explicitly mentioned above, can optionally and beneficiously be used in the media according to the instant invention. Such compounds are known to the expert in the field.

In a preferred embodiment the medium comprises one or more compounds of formula V-5 and/or V-7, preferably with R⁵ n-alkyl, preferably with 2 to 5 C-atoms.

In a further preferred embodiment , which may be identical to the one above, the medium comprises one or more compounds of formula V-8, preferably with R⁵ n-alkyl, preferably with 2 to 5 C-atoms.

Preferably the medium comprises one or more compounds of formula VI-6 preferably with R⁶ n-alkyl, preferably with 3 to 5 C-atoms, or alkenyl, preferably vinyl, and with X⁶ preferably Cl or F, most preferably F.

Preferably the medium comprises one or more compounds of formula VII-4 and/or, preferably, VII-6, preferably together with one or more compounds of formula VII-8 and/or, preferably, VII-10. In these compounds VII-4, VII-6, VII-8 and VII-10 R⁷¹ and R⁷² are preferably, independently from each other, n-alkyl, preferably with 3 to 5 C-atoms.

Component A preferably is used in a concentration from 50 % to 100 %, preferably from 60 % to 100 %, more preferably from 70 % to 100 % and most preferably from 80 % to 100 %, preferably up to to 90 % of the total mixture.

Component B preferably is used in a concentration from more than 0 % to 80 %, preferably from more than 0 % to 30 %, more preferably from 2 % to 20 % and most preferably from 4 % to 15 % of the total mixture.

Component C preferably is used in a concentration from 0 % to 30 %, preferably from 0 % to 20 % and most preferably from 0 % to 10 % of the total mixture.

Optionally, the inventive media can comprise further liquid crystal compounds in order to adjust the physical properties. Such compounds are known to the expert. Their concentration in the media according to the instant invention is preferably 0 % to 30 %, more preferably 0 % to 20 % and most preferably 0.5 % to 15 %.

Preferably the liquid crystal medium contains 50 % to 100 %, more preferably 70 % to 100 % and most preferably 80 % to 100 % and in particular 90 % to 100 % totally of components A, B and C, which contain, preferably predominantly consist of and most preferably entirely consist of one or more of compounds of formulae I to VIII, respectively.

The liquid crystal media according to the instant invention are characterized by a clearing point of 90 °C or more, preferably of 95 °C or more and in particular of 100 °C or more.

The Δn of the liquid crystal media according to the instant invention is 0.170 or more, preferably in the range of 0.180 to 0.280, more preferably in the range of 0.190 to 0.250, most preferably in the range of 0.195 to 0.230 and in particular in the range of 0.200 to 0.225.

The Δε, at 1 kHz and 20 °C, of the liquid crystal media according to the invention is 7.0 or more, preferably 9.0 or more, most preferably 10.0 or more and in particular 11.5 or more. It is, however, preferably 20.0 or less, more preferably 17.0 or less and most preferably 15.0 or less.

Preferably the nematic phase of the inventive media extends at least from 0 °C to 90 °C, more preferably at least from -20 °C to 80 °C, more preferably at least from -20 °C to 90 °C, most preferably at least from - 30 °C to 90 °C and in particular at least from -30 °C to 100 °C, wherein at least means that preferably the lower limit is under cut, wherein the upper limit is surpassed.

In the present application the term dielectrically positive compounds describes compounds with Δε > 3.0, dielectrically neutral compounds are compounds with -1.5 ≤ Δε ≤ 3.0 and dielectrically negative compounds are compounds with Δε < -1.5. The same holds for components. Δε is determined at 1 kHz and 20 °C. The dielectrical anisotropies of the compounds is determined from the results of a solution of 10 % of the individual compounds in a nematic host mixture. The capacities of these test mixtures are determined both in a cell with homeotropic and with homogeneous alignment. The cell gap of both types of cells is approximately 10 µm. The voltage applied is a rectangular wave with a frequency of 1 kHz and a root mean square value typically of 0.5 V to 1.0 V, however, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest and are extrapolated to a concentration of the compounds of interest of 100 %.
Components having a nematic phase at the measurement temperature of 20 °C are measured as such, all others are treated like compounds.

The term threshold voltage refers in the instant application to the optical threshold and is given for 10 % relative contrast (V₁₀) and the term saturation voltage refers to the optical saturation and is given for 90 % relative contrast (V₉₀) both, if not explicitly stated otherwise. The capacitive threshold voltage (V₀, also called Freedericksz-threshold V_{Fr}) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties have been determined with test cells prepared at Merck KGaA, Germany. The test cells for the determination of Δε had a cell gap of 22 µm. The electrode was a circular ITO electrode with an area of 1.13 cm² and a guard ring. The orientation layers were lecithin for homeotropic orientation (ε||) and polyimide AL-1054 from Japan Synthetic Rubber for homogeneuous orientation (ε_{┴}). The capacities were determined with a frequency response analyser Solatron 1260 using a sine wave with a voltage of 0.3 Vᵣₘₛ. The light used in the electro-optical measurements was white light. The set up used was a commercially available equipment of Otsuka, Japan. The characteristic voltages have been determined under perpendicular observation. The threshold (V₁₀) - mid grey (V₅₀) - and saturation (V₉₀) voltages have been determined for 10 %, 50 % and 90 % relative contrast, respectively.

The liquid crystal media according to the present invention can contain further additives and chiral dopants in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 8 to 20 and most preferably of 10 to 16 compounds.

These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e. g. using so called pre-mixtures, which can be e. g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as such, like TN-, TN-AMD, ECB-AMD, VAN-AMD, IPS and OCB LCDs and in particular in composite systems, like PDLC, NCAP, PN LCDs and especially in projectoin type TFT displays.

The melting point T(C,N), the transition from the smectic (S) to the nematic (N) phase T(S,N) and the clearing point T (N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups CₙH₂ₙ₊₁ and CₘH₂ₘ₊₁ are straight chain alkyl groups with n respectively m C-atoms. The interpretation of table B is self evident. Table A does only list the abbreviations for the cores of the structures. The individual compounds are denoted by the abbreviation of the core followed by a hyphen and a code specifying the substituents R¹, R², and L² follows:

| Code for R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH_{2n-I} | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nF.F | CₙH₂ₙ₊₁ | F | F | H |
| nF.F.F | CₙH₂ₙ₊₁ | F | F | F |
| nOF | OCₙH₂ₙ₊₁ | F | H | H |
| nCl | CₙH₂ₙ₊₁ | Cl | H | H |
| nCl.F | CₙH₂ₙ₊₁ | Cl | F | H |
| nCl.F.F | CₙH₂ₙ₊₁ | Cl | F | F |
| nCF₃ | CₙH₂ₙ₊₁ | CF₃ | H | H |
| nCF₃.F | CₙH₂ₙ₊₁ | CF₃ | F | H |
| nCF₃.F.F | CₙH₂ₙ₊₁ | CF₃ | F | F |
| nOCF₃ | CₙH₂ₙ₊₁ | OCF₃ | H | H |
| nOCF₃.F | CₙH₂ₙ₊₁ | OCF₃ | F | H |
| nOCF₃.F.F | CₙH₂ₙ₊₁ | OCF₃ | F | F |
| nOCF₂ | CₙH₂ₙ₊₁ | OCHF₂ | H | H |
| nOCF₂.F | CₙH₂ₙ₊₁ | OCHF₂ | F | H |
| nOCF₂.F.F | CₙH₂ₙ₊₁ | OCHF₂ | F | F |
| nS | CₙH₂ₙ₊₁ | NCS | H | H |
| nS.F | CₙH₂ₙ₊₁ | NCS | F | H |
| nS.F.F | CₙH₂ₙ₊₁ | NCS | F | F |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |

**Table A:**

| | |
|---|---|
| 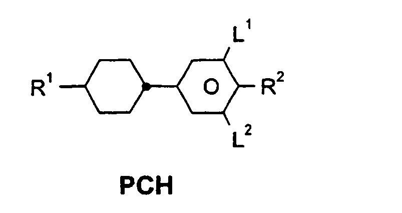 | 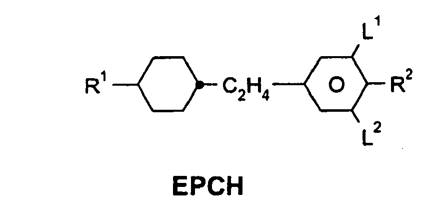 |
| 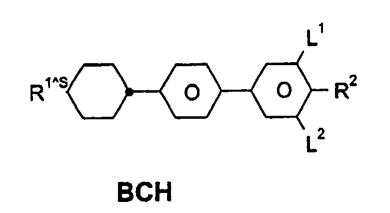 | 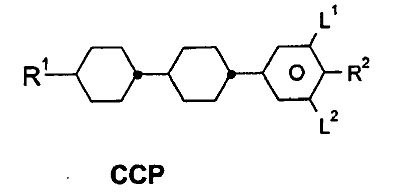 |
| 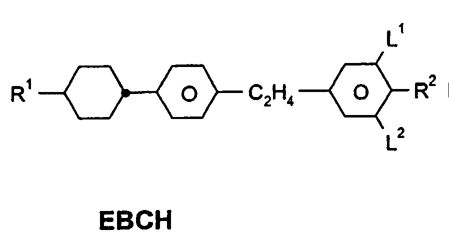 | 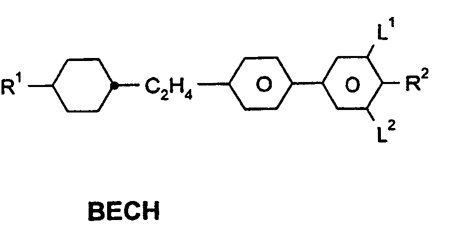 |
| 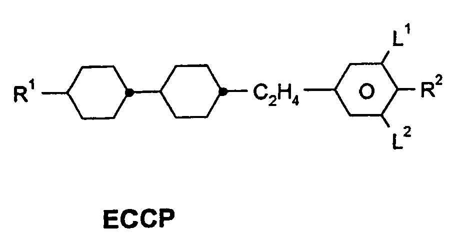 | 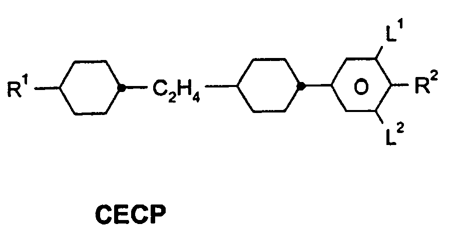 |
| 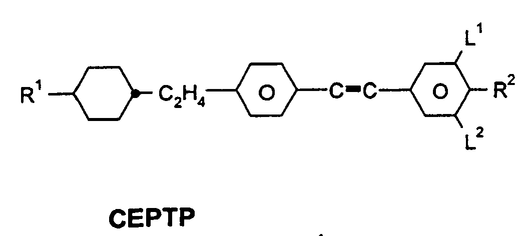 | 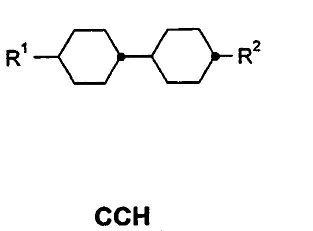 |
| 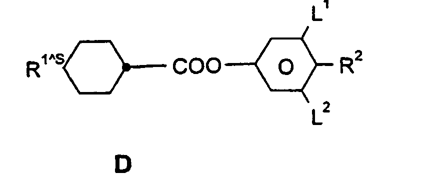 | 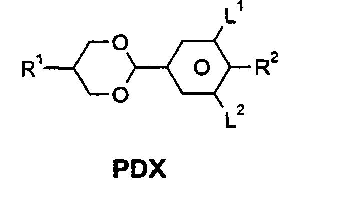 |
| 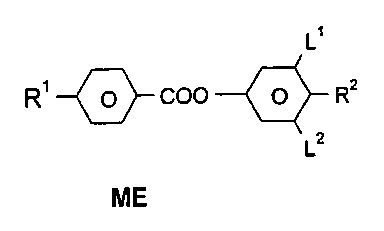 | 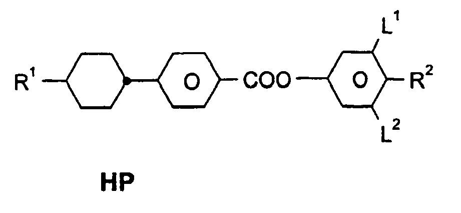 |
| 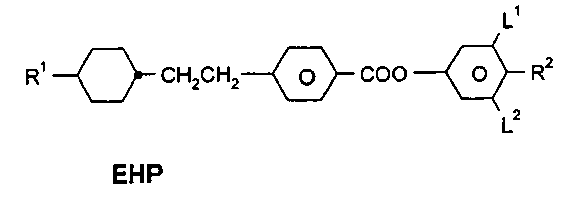 | |
| 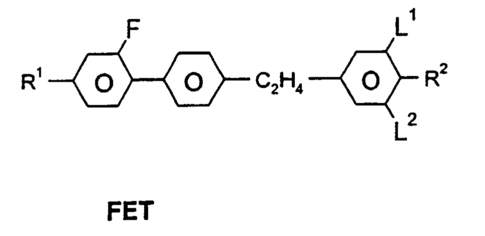 | |

**Table B:**

| | |
|---|---|
| 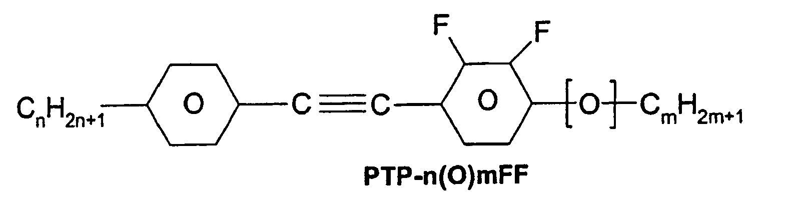 | |
| 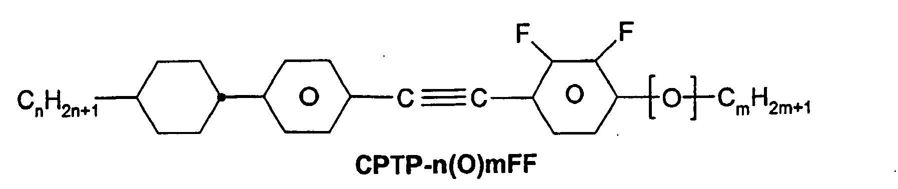 | |
| 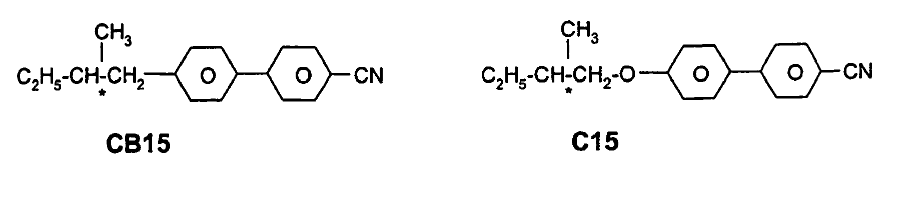 | |
| 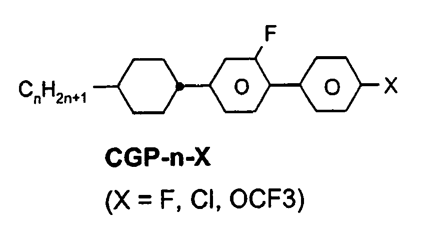 | 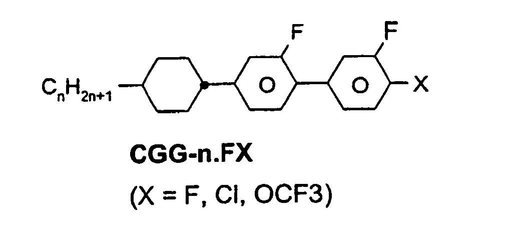 |
| 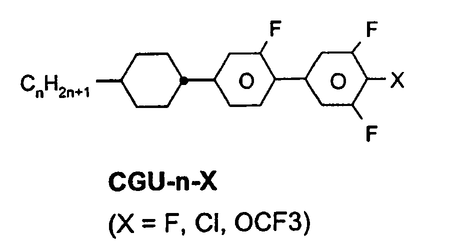 | 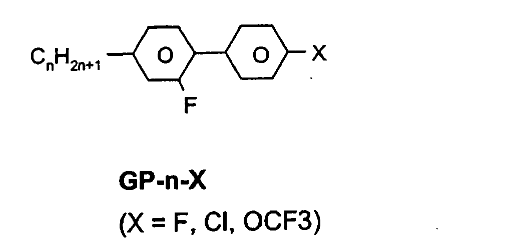 |
| 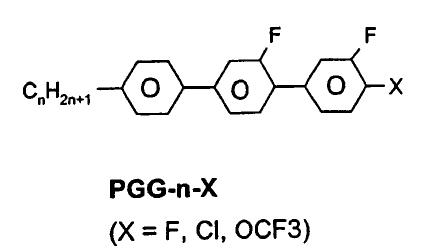 | 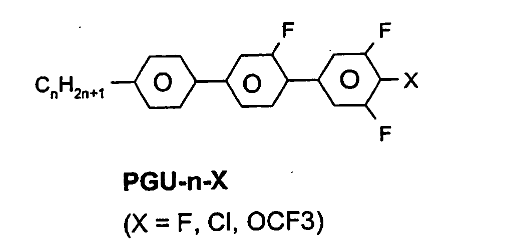 |
| 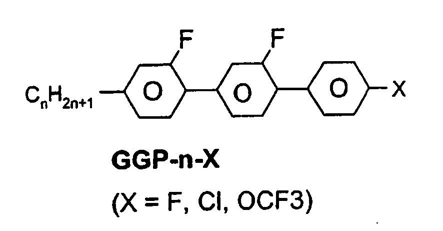 | 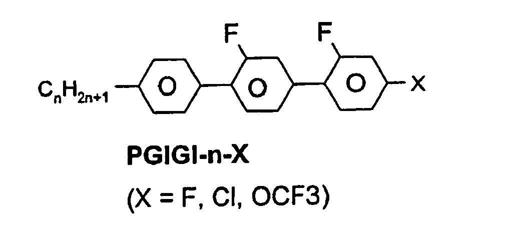 |
| 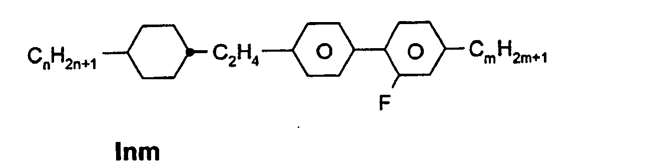 | |
| 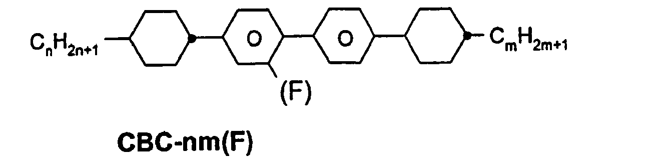 | |
| 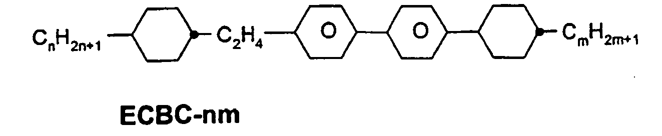 | |
| 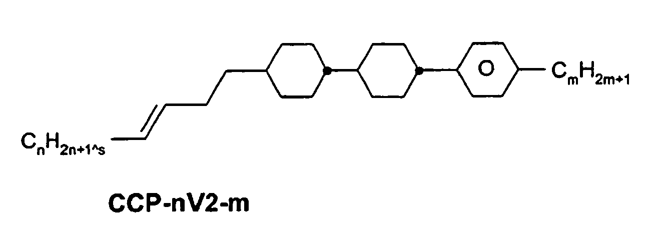 | |
| 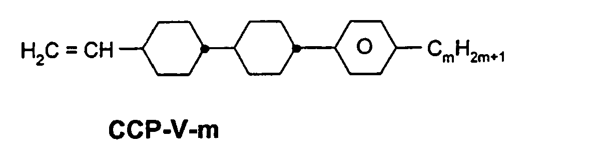 | |
| 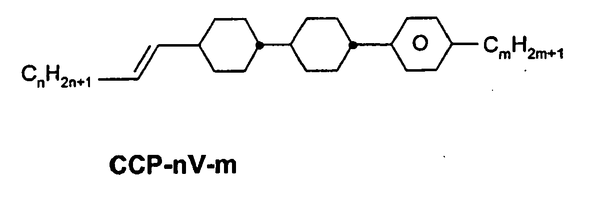 | |
| 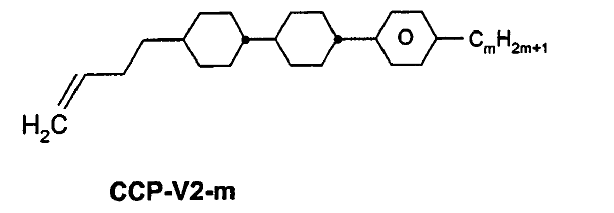 | |
| 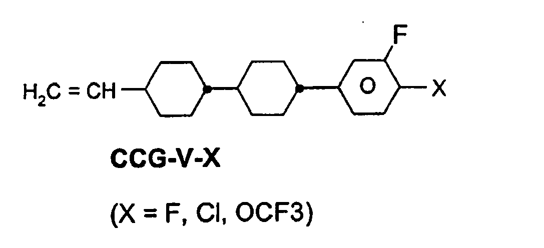 | |
| 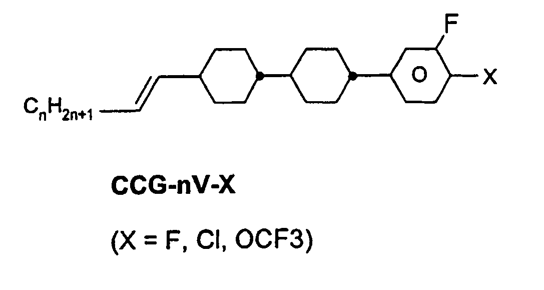 | |
| 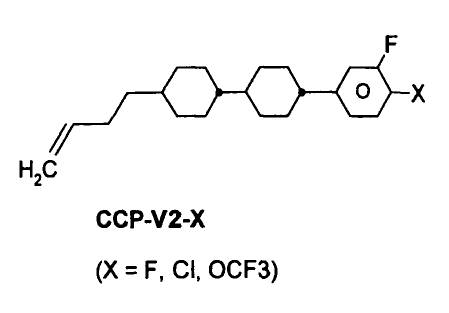 | 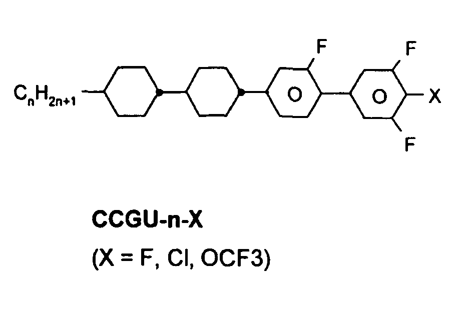 |

The liquid crystal media according to the instant invention do contain preferably
- seven or more, preferably eight or more compounds, preferably of different formulae, selected from the group of compounds of formulae of tables A and B and/or
- one, two or more, preferably three or more compounds, preferably of different formulae, selected from the group of compounds of formulae of table A and/or
- two, three, four or more, preferably five or more compounds, preferably of different formulae, selected from the group of compounds of formulae of table B.

### Examples

The examples given in the following are illustrating the present invention without limiting it in any way.

However, they illustrate typical preferred embodiments. They show the use of typical and preferred constituents and exemplarily illustrate their concentrations. Further they show possible variations of the phyiscal properties of the compositions, illustrating to the expert which properties can be achieved and in which ranges theiy can be modified. Especially the combination of the various properties which can be preferably achieved is thus well defined for the expert.

### Example 1

A liquid crystal mixture is realized with the composition and properties given in the following table.

| Composition | | | Physical Properties | | |
|---|---|---|---|---|---|
| Compound | | | T(N,I) | = 102 | °C |
| No. | Abbreviation | Conc./% | T(S,N) | = <-30 | °C |
| 1 | GGP-3-CL | 9.0 | | | |
| 2 | GGP-5-CL | 24.0 | nₑ (20 °C, 589.3 nm) | = 1.7160 | |
| 3 | PGIGI-3-F | 5.0 | Δn (20 °C, 589.3 nm) | = 0.2004 | |
| 4 | BCH-3F.F | 3.0 | | | |
| 5 | BCH-5F.F | 4.0 | ε\|\| (20 °C, 1 kHz) | = 15.7 | |
| 6 | BCH-3F.F.F | 9.0 | Δε (20 °C, 1 kHz) | = 11.3 | |
| 7 | BCH-5F.F.F | 10.0 | | | |
| 8 | CBC-33F | 4.0 | γ1 (20 °C) | = 338 | mPa·s |
| 9 | CBC-53F | 4.0 | | | |
| 10 | CCG-V-F | 7.0 | k₁ | = 13.8 | pN |
| 11 | PGU-2-F | 6.0 | k₃/k₁ | = 1.07 | |
| 12 | PGU-3-F | 7.0 | | | |
| 13 | FET-2CL | 4.0 | | | |
| 14 | FET-3CL | 4.0 | V₁₀ (20°C) | = 1.17 | V |
| Σ | | 100.0 | | | |

This mixture has a favourably high value of Δn and a high value of Δε and is very well suited for displays with a low operating voltage.

### Example 2

A liquid crystal mixture is realized with the composition and properties given in the following table.

| Composition | | | Physical Properties | | |
|---|---|---|---|---|---|
| Compound | | | T(N,I) | = 103 | °C |
| No. | Abbreviation | Conc./% | T(S,N) | = <-30 | °C |
| 1 | GGP-3-CL | 8.0 | | | |
| 2 | GGP-5-CL | 20.0 | nₑ (20 °C, 589.3 nm) | = 1.7161 | |
| 3 | PGIGI-3-F | 4.0 | Δn (20°C, 589.3 nm) | = 0.2013 | |
| 4 | BCH-3F.F.F | 8.0 | | | |
| 5 | BCH-5F.F.F | 8.0 | ε\|\| (20 °C, 1 kHz) | = 19.4 | |
| 6 | CGU-3-F | 4.0 | Δε (20 °C, 1 kHz) | = 14.8 | |
| 7 | CGU-5-F | 4.0 | | | |
| 8 | CBC-33F | 3.0 | γ₁ (20 °C) | = 413 | mPa·s |
| 9 | CBC-53F | 4.0 | | | |
| 10 | CCGU-3-F | 9.0 | k₁ | = 14.3 | pN |
| 11 | PGU-2-F | 8.0 | k₃/k₁ | = 1.05 | |
| 12 | PGU-3-F | 8.0 | | | |
| 13 | FET-2CL | 6.0 | V₁₀ (20°C) | = 1.04 | V |
| 14 | FET-3CL | 6.0 | | | |
| Σ | | 100.0 | | | |

This mixture has a favourably high value of Δn and a high value Δε and an extrmely good combination of these values with a very low rotational viscosityand thus is very well suited for displays with a low operating voltage.

### Comparative example

A liquid crystal mixture is realized with the composition and properties given in the following table.

| Composition | | | Physical Properties | | |
|---|---|---|---|---|---|
| Compound | | | T(N,I) | = 102 | °C |
| No. | Abbreviation | Conc./% | T(S,N) | = <-20 | °C |
| 1 | GGP-5-CL | 16.0 | | | |
| 2 | BCH-2F.F | 11.0 | nₑ (20 °C, 589.3 nm) | = 1.6692 | |
| 3 | BCH-3F.F | 11.0 | Δn (20°C, 589.3 nm) | = 0.1610 | |
| 4 | BCH-5F.F | 6.0 | | | |
| 5 | BCH-3F.F.F | 8.0 | ε\|\| (20 °C, 1 kHz) | = 15.3 | |
| 6 | CGU-2-F | 9.0 | Δε (20 °C, 1 kHz) | = 10.9 | |
| 7 | CGU-3-F | 9.0 | | | |
| 8 | CGU-5-F | 8.0 | γ₁ (20 °C) | = 277 | mPa·s |
| 9 | CCGU-3-F | 7.0 | | | |
| 10 | BCH-32 | 10.0 | k₁ | = 13.0 | pN |
| 11 | CBC-33F | 3.0 | k₂ | = 6.0 | pN |
| 12 | CBC-53F | 2.0 | k₃/k₁ | = 1.01 | |
| Σ | | 100.0 | | | |
| | | | V₁₀ (20°C) | = 1.14 | V |

This mixture has an unfavourably low birefringence.

### Example 3

A liquid crystal mixture is realized with the composition and properties given in the following table.

| Composition | | | Physical Properties | | |
|---|---|---|---|---|---|
| Compound | | | T(N,I) | = 102 | °C |
| No. | Abbreviation | Conc./% | T(S,N) | = <-20 | °C |
| 1 | GGP-3-CL | 8.0 | | | |
| 2 | GGP-5-CL | 20.0 | nₑ (20 °C, 589.3 nm) | = 1.7152 | |
| 3 | PGIGI-3-F | 4.0 | Δn (20 °C, 589.3 nm) | = 0.2004 | |
| 4 | BCH-4F.F.F | 8.0 | | | |
| 5 | BCH-5F.F.F | 8.0 | ε\|\| (20 °C, 1 kHz) | = 19.6 | |
| 6 | CGU-3-F | 4.0 | Δε (20 °C, 1 kHz) | = 14.9 | |
| 7 | CGU-5-F | 4.0 | | | |
| 8 | CBC-33F | 3.0 | | | |
| 9 | CBC-53F | 4.0 | | | |
| 10 | CCGU-3-F | 9.0 | k₁ | = 14.7 | pN |
| 11 | PGU-2-F | 8.0 | k₃/k₁ | = 1.03 | |
| 12 | PGU-3-F | 8.0 | | | |
| 13 | FET-2CL | 6.0 | V₁₀ (20°C) | = 1.05 | V |
| 14 | FET-3CL | 6.0 | | | |
| Σ | | 100.0 | | | |

This mixture has a favourably high value of Δn and a high value of Δε and is very well suited for displays with a low operating voltage.

### Example 4

A liquid crystal mixture is realized with the composition and properties given in the following table.

| Composition | | | Physical Properties | | |
|---|---|---|---|---|---|
| Compound | | | T(N,I) | = 100 | °C |
| No. | Abbreviation | Conc./% | T(S,N) | = <-20 | °C |
| 1 | GGP-3-CL | 8.0 | | | |
| 2 | GGP-5-CL | 18.0 | nₑ (20 °C, 589.3 nm) | = 1.7155 | |
| 3 | PGIGI-3-F | 4.0 | Δn (20 °C, 589.3 nm) | = 0.2001 | |
| 4 | BCH-3F.F | 5.0 | | | |
| 5 | BCH-5F.F | 6.0 | ε\|\| (20 °C, 1 kHz) | = 18.5 | |
| 6 | BCH-3F.F.F | 9.0 | Δε (20 °C, 1 kHz) | = 13.9 | |
| 7 | BCH-5F.F.F | 10.0 | | | |
| 8 | CBC-33F | 2.0 | | | |
| 9 | CBC-53F | 2.0 | | | |
| 10 | CCGU-3-F | 8.0 | k₁ | = 15.3 | pN |
| 11 | PGU-2-F | 7.0 | k₃/k₁ | = 1.02 | |
| 12 | PGU-3-F | 7.0 | | | |
| 13 | FET-2CL | 5.0 | V₁₀ (20°C) | = 1.11 | V |
| 14 | FET-3CL | 3.0 | | | |
| 15 | FET-5CL | 6.0 | | | |
| Σ | | 100.0 | | | |

This mixture has a favourably high value of Δn and a high value of Δε and is very well suited for displays with a low operating voltage.

### Example 5

A liquid crystal mixture is realized with the composition and properties given in the following table.

| Composition | | | Physical Properties | | |
|---|---|---|---|---|---|
| Compound | | | T(N,I) | = 101 | °C |
| No. | Abbreviation | Conc. /% | T(S,N) | = <-20 | °C |
| 1 | GGP-3-CL | 8.0 | | | |
| 2 | GGP-5-CL | 24.0 | nₑ (20 °C, 589.3 nm) | = 1.7161 | |
| 3 | PGIGI-3-F | 4.0 | Δn (20 °C, 589.3 nm) | = 0.2000 | |
| 4 | BCH-3F.F | 4.0 | | | |
| 5 | BCH-5F.F | 3.0 | ε\|\| (20°C, 1 kHz) | = 17.2 | |
| 6 | BCH-3F.F.F | 9.0 | Δε (20 °C, 1 kHz) | = 12.6 | |
| 7 | BCH-5F.F.F | 9.0 | | | |
| 8 | CBC-33F | 4.0 | γ₁ (20 °C) | = 354 | mPa·s |
| 9 | CBC-53F | 4.0 | | | |
| 10 | CCG-V-F | 7.0 | k₁ | = 14.7 | pN |
| 11 | PGU-2-F | 8.0 | k₃/k₁ | = 1.09 | |
| 12 | PGU-3-F | 8.0 | | | |
| 13 | FET-2CL | 4.0 | V₁₀ (20°C) | = 1.14 | V |
| 14 | FET-3CL | 4.0 | | | |
| Σ | | 100.0 | | | |

This mixture has a favourably high value of Δn and a high value of Δε and is very well suited for displays with a low operating voltage.

### Example 6

A liquid crystal mixture is realized with the composition and properties given in the following table.

| Composition | | | Physical Properties | | |
|---|---|---|---|---|---|
| Compound | | | T(N,I) | = 100 | °C |
| No. | Abbreviation | Conc. /% | T(S,N) | = <-20 | °C |
| 1 | GGP-3-CL | 9.0 | | | |
| 2 | GGP-5-CL | 24.0 | nₑ (20 °C, 589.3 nm) | = 1.7162 | |
| 3 | PGIGI-3-F | 4.0 | Δn(20°C, 589.3nm) | = 0.2001 | |
| 4 | BCH-3F.F | 4.0 | | | |
| 5 | BCH-5F.F | 5.0 | ε\|\| (20 °C, 1 kHz) | = 16.9 | |
| 6 | BCH-3F.F.F | 9.0 | Δε (20 °C, 1 kHz) | = 12.3 | |
| 7 | BCH-5F.F.F | 10.0 | | | |
| 8 | CBC-33F | 3.0 | γ1 (20 °C) | = 327 | mPa·s |
| 9 | CBC-53F | 4.0 | | | |
| 10 | CCG-V-F | 6.0 | k₁ | = 14.5 | pN |
| 11 | PGU-2-F | 6.0 | k₃/k₁ | = 1.05 | |
| 12 | PGU-3-F | 7.0 | | | |
| 13 | FET-2CL | 5.0 | V₁₀ (20°C) | = 1.15 | V |
| 14 | FET-3CL | 4.0 | | | |
| Σ | | 100.0 | | | |

This mixture has a favourably high value of Δn and a high value of Δε and is very well suited for displays with a low operating voltage.

### Example 7

A liquid crystal mixture is realized with the composition and properties given in the following table.

| Composition | | | Physical Properties | | |
|---|---|---|---|---|---|
| Compound | | | T(N,I) | = 101 | °C |
| No. | Abbreviation | Conc./% | T(S,N) | = <-20 | °C |
| 1 | GGP-5-CL | 16.0 | | | |
| 2 | PGIGI-3-F | 7,0 | nₑ (20 °C, 589.3 nm) | = 1.7219 | |
| 3 | BCH-3F.F | 7,0 | Δn (20°C, 589.3 nm) | = 0.2023 | |
| 4 | BCH-5F.F | 7,0 | | | |
| 5 | CCP-V-1 | 11.0 | ε\|\| (20 °C, 1 kHz) | = 16.1 | |
| 6 | CBC-33F | 3.0 | Δε (20°C, 1 kHz) | = 11.6 | |
| 7 | CBC-53F | 3.0 | | | |
| 8 | CCG-V-F | 3.0 | γ₁ (20°C) | = 277 | mPa·s |
| 9 | PGU-3-CL | 6.0 | | | |
| 10 | PGU-2-F | 11.0 | | | |
| 11 | PGU-3-F | 11.0 | | | |
| 12 | FET-2CL | 10.0 | | | |
| 13 | FET-3CL | 5.0 | | | |
| Σ | | 100.0 | | | |

This mixture has a favourably high value of Δn and a high value of Δε and is very well suited for displays with a low operating voltage.

## Claims

1. Liquid crystal medium, **characterized in that** it comprises
- a dielectrically positive component, component A, consisting of dielectrically positive compounds, comprising one or more compounds of formula I and one or more compounds of formula II 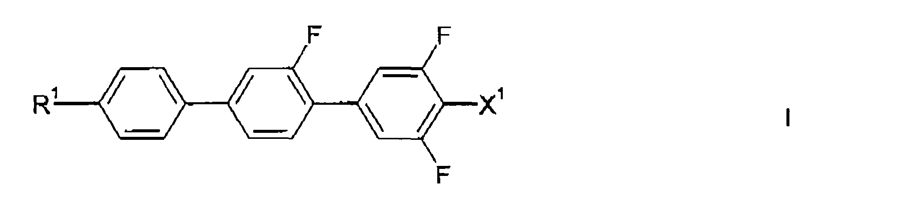 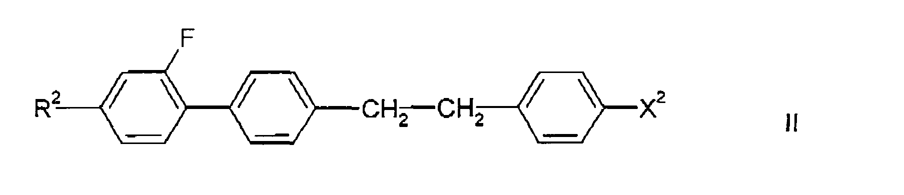 wherein
R¹ and R², independently of each other, are alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
X¹ and X², independently of each other, are F, Cl or fluorinated alkyl or fluorinated alkoxy, each with 1 to 4 C-atoms,
wherein, optionally, two of the 6-membered rings in formula I may be linked by an group selected from
-CH₂-CH₂-, -CF₂-CF₂-, -CF₂-O-, -O-CF₂- and -CO-O-, and
- a dielectrically neutral component, component B, consisting of dielectrically neutral compounds, comprising one or more compounds of formula IVb 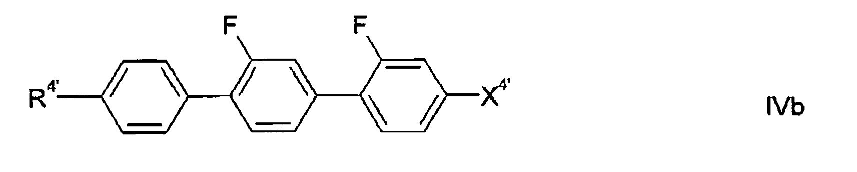 wherein
R^{4'} is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
X^{4'} is F.

2. Liquid crystal medium according to claim 1, **characterized in that** it comprises a dielectrically positive component A comprising additionally one or more compounds, selected the group of compounds of formulae of formula III IVa and V 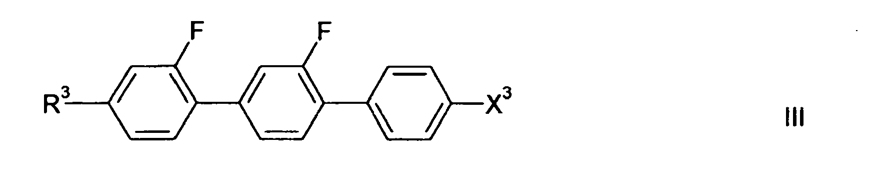 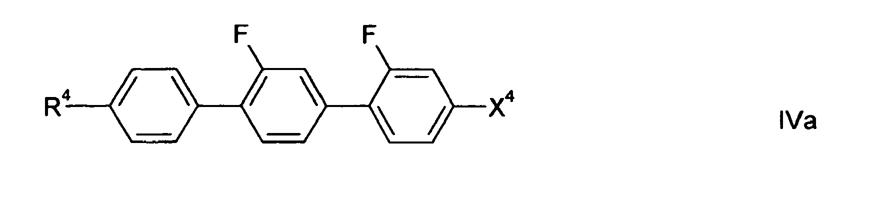 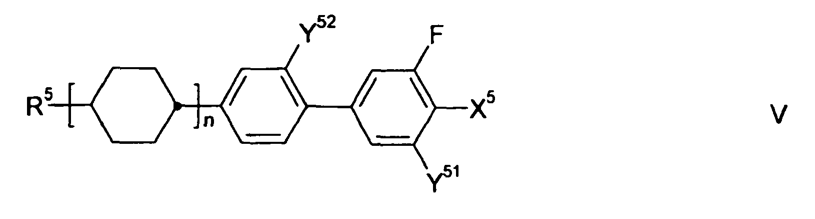 wherein
R³, R⁴ and R⁵, independently of each other, are alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,
X³ and X⁵, independently of each other, are F, Cl or fluorinated alkyl or fluorinated alkoxy, each with 1 to 4 C-atoms,
X⁴ is fluorinated alkyl or fluorinated alkoxy, each with 1 to 4 C-atoms,
Y⁵¹ and Y⁵² are, independently of each other, H or F and
n is 0, 1 or 2,
wherein, optionally, two of the 6-membered rings in formulae III to V may be linked by an group selected from -CH₂-CH₂-, -CF₂-CF₂-, -CF₂-O-, -O-CF₂- and -CO-O-, preferably -CH₂-CH₂- and -CF₂-O-, most preferably -CH₂-CH₂-.

3. Liquid crystal medium according to at least one of claims 1 and 2, **characterized in that** it additionally comprises a dielectrically neutral component B comprising one or more compounds of formula VII 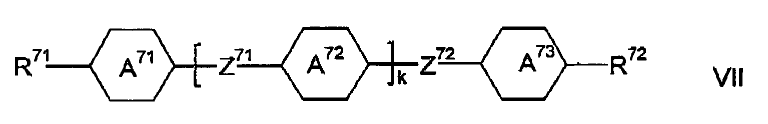 wherein
R⁷¹ and R⁷², independently of each other, have the meaning given for R¹ in claim 1, 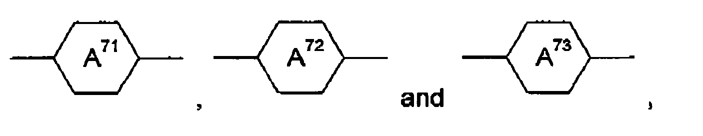 independently of each other, and in case 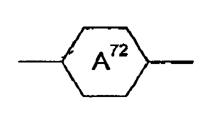 is present twice, also these, independently of each other, are 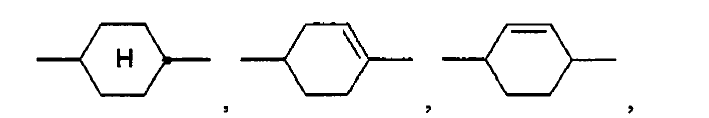 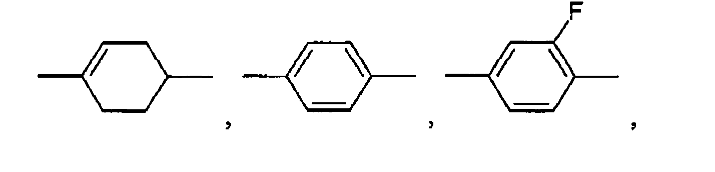 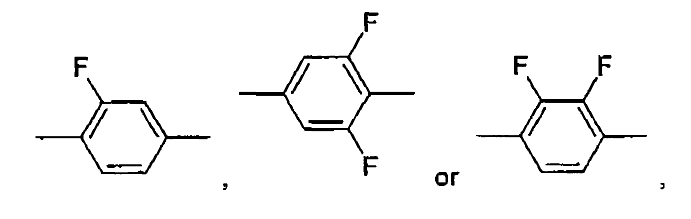
Z⁷¹ and Z⁷² are, independently of each other, and in case Z⁷¹ is present twice, also these independently of each other, -CH₂CH₂-, -COO-, trans- CH=CH-, trans- -CF=CF-, -CH₂O-, -CF₂O- or a single bond, and
k is 0, 1 or 2, preferably 1 or 2.

4. Liquid crystal medium according to at least one of claims 1 to 3, **characterized in that** it additionally comprises a dielectrically negative component C comprising one or more compounds of formula VIII 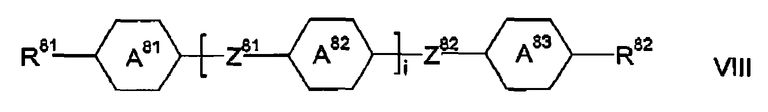 wherein
R⁸¹ and R⁸² independently of each other have the meaning given for R¹ in claim 1, 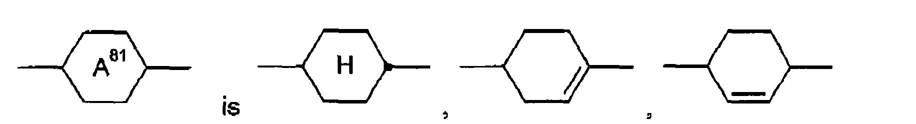 or 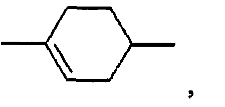 one of 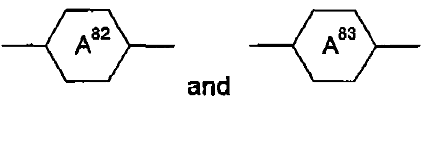 is 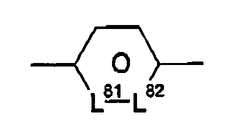 and the other one has one of the new meanings given for 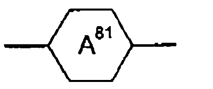 or is 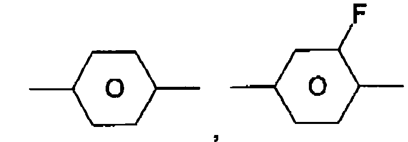 or 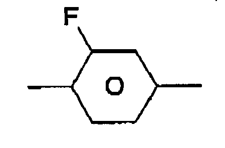 at least one one of L⁸¹ and L⁸² is =C(-F)- and the other is =C(-F)- or -N-,
at least one of Z⁸¹ and Z⁸² is a single bond and the other is -CH₂CH₂-, -COO-, trans- CH=CH-, trans- -CF=CF-, -CH₂O- -CF₂O-or a single bond, and
j is 0 or 1.

5. Liquid crystal medium according to at least one of claims 1 to 4, **characterized in that** it comprises a dielectrically negative component C, which has a dielectrical anisotropy below -1.5, and consists of dielectrically negative compounds.

6. Liquid crystal medium according to at least one of claims 1 to 5, **characterized in that** it comprises one or more compounds of formula I in which X¹ is F.

7. Liquid crystal medium according to at least one of claims 1 to 5, **characterized in that** it comprises one or more compounds of formula II in which X² is Cl.

8. Liquid crystal display, **characterized in that** it comprises a liquid crystal medium according to at least one of claims 1 to 7.

9. Liquid crystal display according to claim 8, **characterized in that** it is addressed by an active matrix.

10. Use of a liquid crystal medium according to at least one of claims 1 to 7 in a liquid crystal display.

## Patentansprüche

1. Flüssigkristallmedium, **dadurch gekennzeichnet, dass** es
- eine dielektrisch positive Komponente, Komponente A, die aus dielektrisch positiven Verbindungen besteht, enthaltend eine oder mehrere Verbindungen der Formel I und eine oder mehrere Verbindungen der Formel II 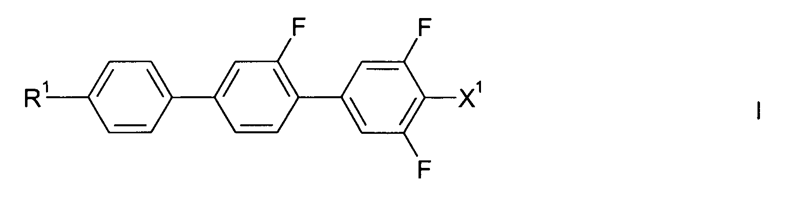 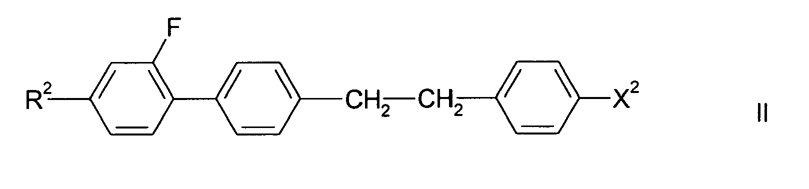 worin
R¹ und R² unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten,
X¹ und X² unabhängig voneinander F, Cl oder fluoriertes Alkyl oder fluoriertes Alkoxy, jeweils mit 1 bis 4 C-Atomen, bedeuten,
worin gegebenenfalls zwei der 6-gliedrigen Ringe in Formel I durch eine Gruppe verknüpft sein können, die ausgewählt ist aus
-CH₂-CH₂-, -CF₂-CF₂-, -CF₂-O-, -O-CF₂- und -CO-O-, und
- eine dielektrisch neutrale Komponente, Komponente B, die aus dielektrisch neutralen Verbindungen besteht, enthaltend eine oder mehrere Verbindungen der Formel IVb 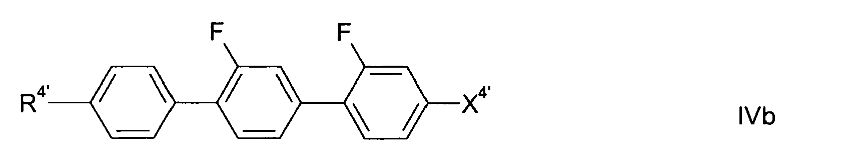 worin
R⁴' Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet,
X⁴ F bedeutet,
enthält.

2. Flüssigkristallmedium nach Anspruch 1, **dadurch gekennzeichnet, dass** es eine dielektrisch positive Komponente A zusätzlich enthaltend eine oder mehrere Verbindungen ausgewählt aus der Gruppe der Verbindungen der Formeln III, IVa und V 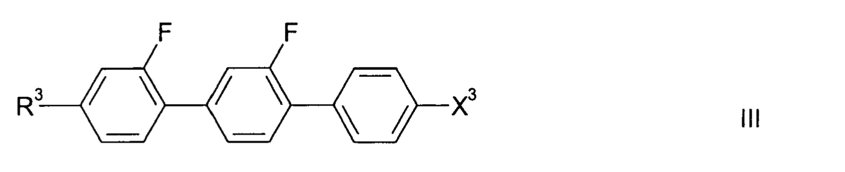 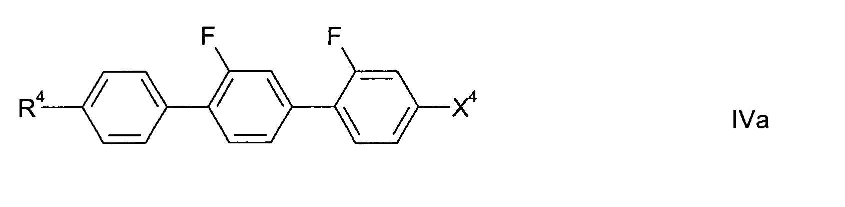 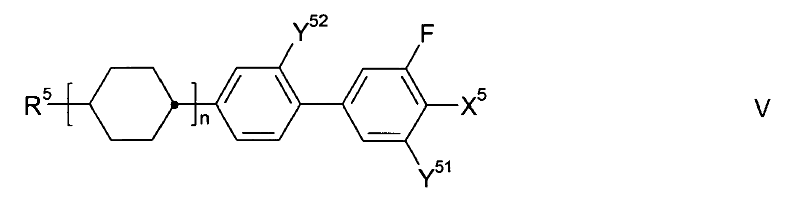 enthält, worin
R³, R⁴ und R⁵ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten,
X³ und X⁵ unabhängig voneinander F, Cl oder fluoriertes Alkyl oder fluoriertes Alkoxy, jeweils mit 1 bis 4 C-Atomen, bedeuten,
X⁴ fluoriertes Alkyl oder fluoriertes Alkoxy, jeweils mit 1 bis 4 C-Atomen, bedeutet,
Y⁵¹ und Y⁵² unabhängig voneinander H oder F bedeuten und
n 0, 1 oder 2 bedeutet,
worin gegebenenfalls zwei der 6-gliedrigen Ringe in den Formeln III bis V durch eine Gruppe verknüpft sein können, die ausgewählt ist aus
-CH₂-CH₂-, -CF₂-CF₂-, -CF₂-O-, -O-CF₂- und -CO-O-, vorzugsweise -CH₂-CH₂- und -CF₂-O-, insbesondere bevorzugt -CH₂-CH₂-.

3. Flüssigkristallmedium nach mindestens einem der Ansprüche 1 und 2, **dadurch gekennzeichnet, dass** es zusätzlich eine dielektrisch neutrale Komponente B enthaltend eine oder mehrere Verbindungen der Formel VII 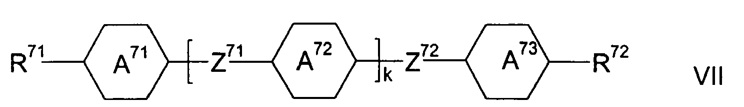 enthält, worin
R⁷¹ und R⁷² unabhängig voneinander die für R¹ in Anspruch 1 angegebene Bedeutung besitzen, 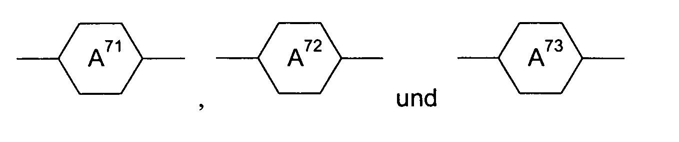 unabhängig voneinander und, wenn 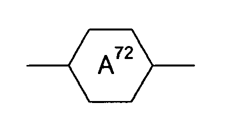 zweifach vorhanden ist, auch diese unabhängig voneinander 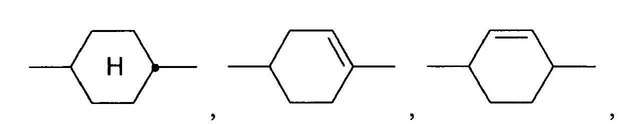 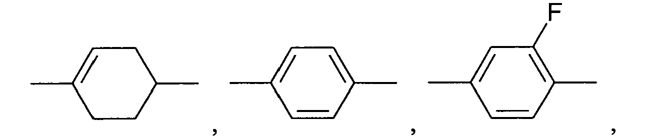 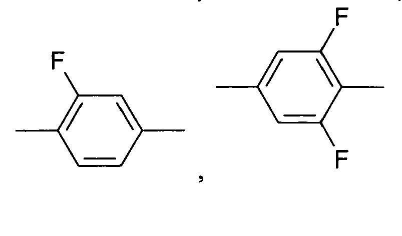 oder 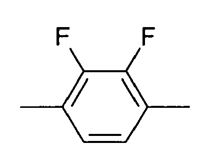 bedeuten,
Z⁷¹ und Z⁷² unabhängig voneinander und, wenn Z⁷¹ zweifach vorhanden ist, auch diese unabhängig voneinander -CH₂CH₂-, -COO-, trans- CH=CH-, trans- -CF=CF-, -CH₂O-, -CF₂O- oder eine Einfachbindung bedeuten und
k 0, 1 oder 2, vorzugsweise 1 oder 2 bedeutet.

4. Flüssigkristallmedium nach mindestens einem der Ansprüche 1 bis 3, **dadurch gekennzeichnet, dass** es zusätzlich eine dielektrisch negative Komponente C enthaltend eine oder mehrere Verbindungen der Formel VIII 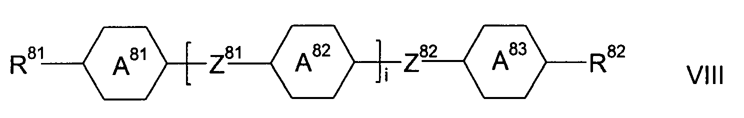 enthält, worin
R⁸¹ und R⁸² unabhängig voneinander die für R¹ in Anspruch 1 angegebene Bedeutung besitzen, 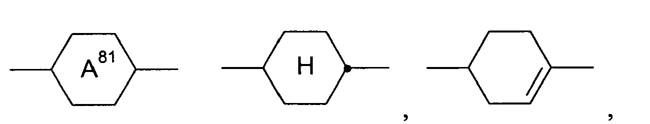 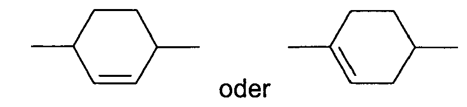 bedeutet,
eines von 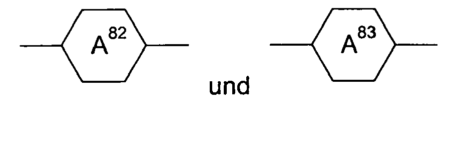 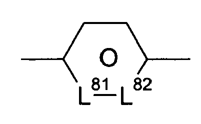 bedeutet
und das andere eine der neuen für 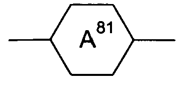 angegebenen
Bedeutungen besitzt oder 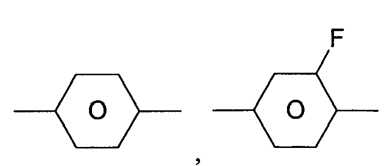 oder 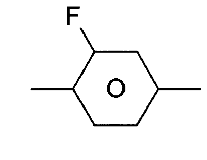 bedeutet,
mindestens eines von L⁸¹ und L⁸² =C(-F)- und das andere =C(-F)- oder =N- bedeutet,
mindestens eines von Z⁸¹ und Z⁸² eine Einfachbindung bedeutet und das andere -CH₂CH₂-, -COO-, trans- CH=CH-, trans--CF=CF-, -CH₂O-, -CF₂O- oder eine Einfachbindung bedeutet und
i 0 oder 1 bedeutet.

5. Flüssigkristallmedium nach mindestens einem der Ansprüche 1 bis 4, **dadurch gekennzeichnet, dass** es eine dielektrisch negative Komponente C enthält, die eine dielektrische Anisotropie unter-1,5 aufweist und aus dielektrisch negativen Verbindungen besteht.

6. Flüssigkristallmedium nach mindestens einem der Ansprüche 1 bis 5, **dadurch gekennzeichnet, dass** es eine oder mehrere Verbindungen der Formel I enthält, in der X¹ F bedeutet.

7. Flüssigkristallmedium nach mindestens einem der Ansprüche 1 bis 5, **dadurch gekennzeichnet, dass** es eine oder mehrere Verbindungen der Formel II enthält, in der X² Cl bedeutet.

8. Flüssigkristallanzeige, **dadurch gekennzeichnet, dass** sie ein Flüssigkristallmedium nach mindestens einem der Ansprüche 1 bis 7 enthält.

9. Flüssigkristallanzeige nach Anspruch 8, **dadurch gekennzeichnet, dass** sie durch eine Aktivmatrix angesprochen wird.

10. Verwendung eines Flüssigkristallmediums nach mindestens einem der Ansprüche 1 bis 7 in einer Flüssigkristallanzeige.

## Revendications

1. Milieu cristallin liquide, **caractérisé en ce qu'**il comprend :
- un composant positif diélectriquement, soit un composant A, constitué par des composés positifs diélectriquement, comprenant un ou plusieurs composés de la formule I et un ou plusieurs composés de la formule II 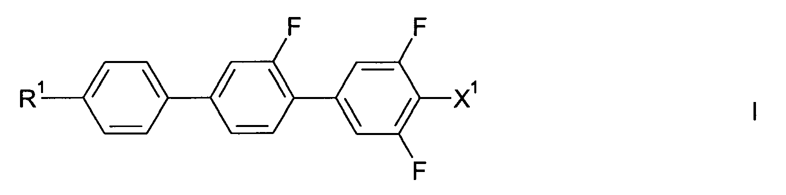 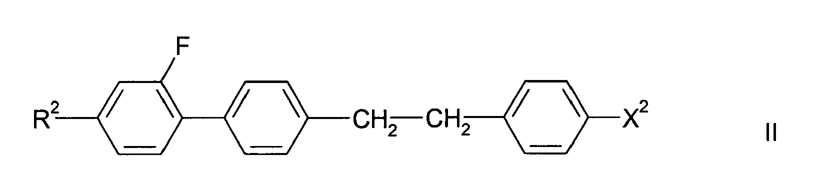
dans lesquelles
R¹ et R² indépendamment l'un de l'autre, sont alkyle, alcoxy, alkyle fluoré ou alcoxy fluoré avec de 1 à 7 atomes de C, alkényle, alkényloxy, alcoxyalkyle ou alkényle fluoré avec de 2 à 7 atomes de C,
X¹ et X² indépendamment l'un de l'autre, sont F, Cl ou alkyle fluoré ou alcoxy fluoré, chacun avec de 1 à 4 atomes de C,
où, en option, deux des cycles à six éléments de la formule I peuvent être liés par un groupe choisi parmi
-CH₂-CH₂-, -CF₂-CF₂-, -CF₂-O-, -O-CF₂- et -CO-O et
- un composant neutre diélectriquement, soit le composant B, constitué par des composés neutres diélectriquement, comprenant un ou plusieurs composés de la formule IVb 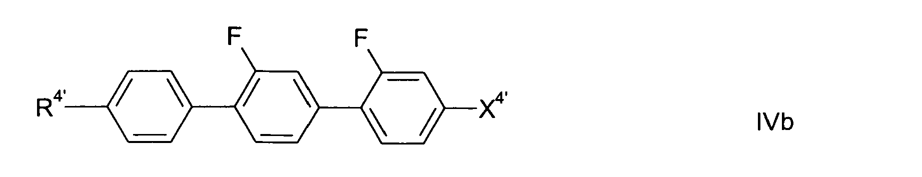
dans laquelle
R^{4'} est alkyle, alcoxy, alkyle fluoré ou alcoxy fluoré avec de 1 à 7 atomes de C, alkényle, alkényloxy, alcoxyalkyle ou alkényle fluoré avec de 2 à 7 atomes de C,
X^{4'} est F.

2. Milieu cristallin liquide selon la revendication 1, **caractérisé en ce qu'**il comprend un composant positif diélectriquement A comprenant de façon additionnelle un ou plusieurs composés, choisis parmi le groupe de composés des formules III, IVa et V 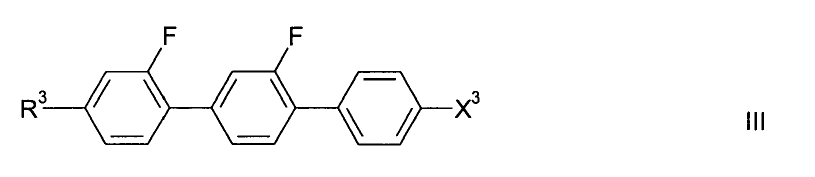 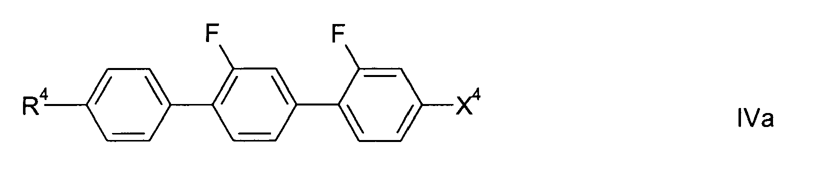 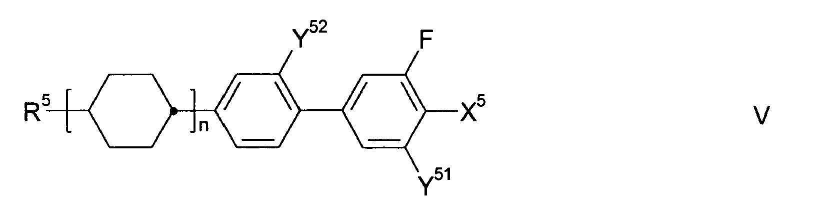 dans lesquelles
R³, R⁴ et R⁵ indépendamment les uns des autres, sont alkyle, alcoxy, alkyle fluoré ou alcoxy fluoré avec de 1 à 7 atomes de C, alkényle, akényloxy, alcoxyalkyle ou alkényle fluoré avec de 2 à 7 atomes de C,
X³ et X⁵ indépendamment l'un de l'autre, sont F, Cl ou alkyle fluoré ou alcoxy fluoré, chacun avec de 1 à 4 atomes de C,
X⁴ est alkyle fluoré ou alcoxy fluoré, chacun avec de 1 à 4 atomes de C,
Y⁵¹ et Y⁵² sont, indépendamment l'un de l'autre, H ou F et
n est 0, 1 ou 2,
où, en option, deux des cycles à 6 éléments des formules III à V peuvent être liés par un groupe choisi parmi
-CH₂-CH₂-, -CF₂-CF₂-, -CF₂-O-, -O-CF₂- et -CO-O-, de préférence -CH₂-CH₂- et -CF₂-O-, de la façon la plus préférable -CH₂-CH₂-.

3. Milieu cristallin liquide selon au moins l'une des revendications 1 et 2, **caractérisé en ce qu'**il comprend de façon additionnelle un composant neutre diélectriquement B comprenant un ou plusieurs composés de la formule VII 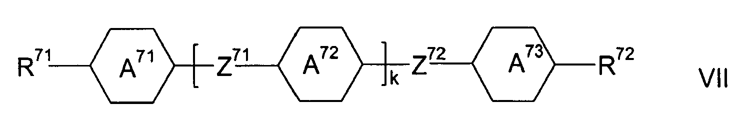 dans laquelle
R⁷¹ et R⁷² indépendamment l'un de l'autre, présentent la signification donnée pour R¹ selon la revendication 1, 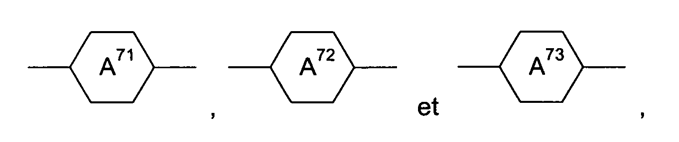 indépendamment les uns des autres et dans le cas où 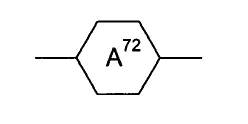 est présent deux fois, également ceux-ci, indépendamment l'un de l'autre, sont 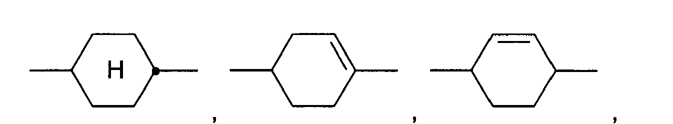 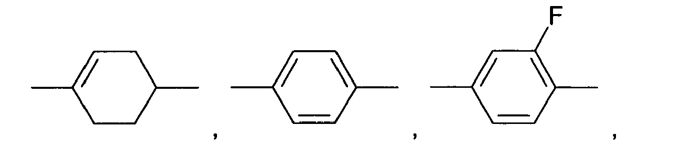 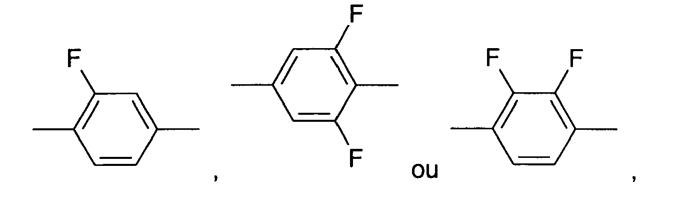
Z⁷¹ et Z⁷² sont, indépendamment l'un de l'autre et dans le cas où Z⁷¹ est présent deux fois, également ceux-ci, indépendamment l'un de l'autre, -CH₂CH₂-, -COO-, transCH=CH-, trans- -CF=CF-, -CH₂O-, -CF₂O- ou une liaison simple, et
k est 0, 1 ou 2, de préférence 1 ou 2.

4. Milieu cristallin liquide selon au moins l'une des revendications 1 à 3, **caractérisé en ce qu'**il comprend de façon additionnelle un composant négatif diélectriquement C comprenant un ou plusieurs composés de la formule VIII 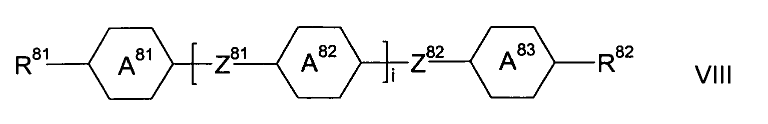 dans laquelle
R⁸¹ et R⁸² indépendamment l'un de l'autre, présentent la signification donnée pour R¹ selon la revendication 1 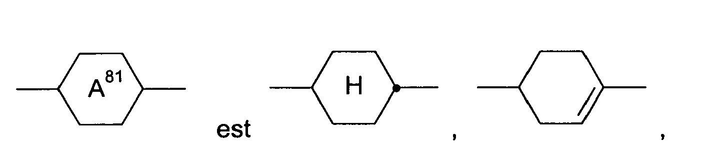 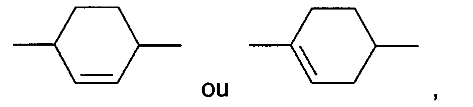 l'un de 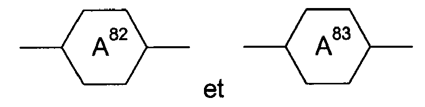 est 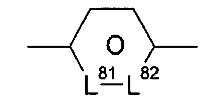 et l'autre présente l'une des nouvelles significations données pour 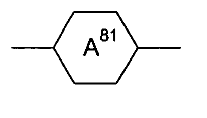 ou est 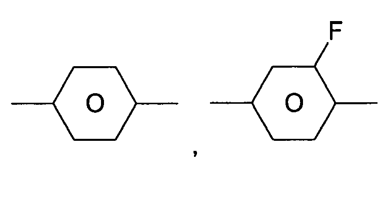 ou 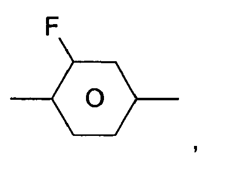 au moins l'un de L⁸¹ et L⁸² est =C(-F)- et l'autre est =C(-F)- ou =N-, au moins l'un de Z⁸¹ et Z⁸² est une liaison simple et l'autre est -CH₂CH₂-, -COO-, trans- CH=CH-, trans- -CF=CF-, -CH₂O-, -CF₂O- ou une liaison simple, et
i est 0 ou 1.

5. Milieu cristallin liquide selon au moins l'une des revendications 1 à 4, **caractérisé en ce qu'**il comprend un composant négatif diélectriquement C, qui présente une anisotropie diélectrique inférieure à -1,5, et qui est constitué par des composés négatifs diélectriquement.

6. Milieu cristallin liquide selon au moins l'une des revendications 1 à 5, **caractérisé en ce qu'**il comprend un ou plusieurs composés de la formule I dans laquelle X¹ est F.

7. Milieu cristallin liquide selon au moins l'une des revendications 1 à 5, **caractérisé en ce qu'**il comprend un ou plusieurs composés de la formule II dans laquelle X² est Cl.

8. Affichage à cristaux liquides **caractérisé en ce qu'**il comprend un milieu cristallin liquide selon au moins l'une des revendications 1 à 7.

9. Affichage à cristaux liquides selon la revendication 8, **caractérisé en ce qu'**il est adressé au moyen d'une matrice active.

10. Utilisation d'un milieu cristallin liquide selon au moins l'une des revendications 1 à 7 dans un affichage à cristaux liquides.
